# EUROPÄISCHE PATENTSCHRIFT

(11) **EP 3 183 624 B1**
(45) Veröffentlichungstag und Bekanntmachung des Hinweises auf die Patenterteilung: **19.08.2020**
(21) Anmeldenummer: 15753901.6
(22) Anmeldetag: 20.08.2015
(51) Int. Cl.: F24F 11/83, G05D 23/19

(54) **BASISSTELLGERÄT ZUR EINSTELLUNG EINER WÄRMETRANSFERFLUIDSTRÖMUNG EINER HEIZ- ODER KÜHLANLAGE**
BASIC SETTING DEVICE FOR SETTING A HEAT TRANSFER FLUID FLOW OF A HEATING OR COOLING INSTALLATION
UNITÉ DE COMMANDE DE BASE POUR COMMANDER UN ÉCOULEMENT DE FLUIDE CALOPORTEUR POUR SYSTÈME DE CHAUFFAGE OU DE REFROIDISSEMENT

(30) Priorität: 22.08.2014 DE 102014012621
(43) Veröffentlichungstag der Anmeldung: 28.06.2017
(73) Patentinhaber: Samson Aktiengesellschaft, 60314 Frankfurt (DE)
(72) Erfinder: NAHLER, Gert, 60528 Frankfurt am Main (DE); SCHWAN, Rainer, 60437 Frankfurt am Main (Nieder-Eschbach) (DE)
(74) Vertreter: Schmid, Nils T.F.
(86) Internationale Anmeldenummer: PCT/EP2015/001709
(87) Internationale Veröffentlichungsnummer: WO 2016/026575

(56) Entgegenhaltungen:
- DE-C1- 19 622 267
- FR-A1- 2 692 345
- US-A- 5 007 582
- US-A1- 2014 229 022
- US-B1- 6 276 264

## Beschreibung

Die Erfindung betrifft ein kompaktes Basisstellgerät zur Einstellung einer Wärmetransferfluidströmung einer Heiz- oder Kühlanlage. Heiz- oder Kühlanlagen werden zur Gebäudeklimatisierung, insbesondere als Klimaanlage, Etagen-, Zentral- oder Blockheizung realisiert. Insbesondere kann eine Heiz- oder Kühlanlage zumindest einen Teil eines Nah- oder Fern- -heiz- oder -kühlsystems bilden. Heiz- oder Kühlanlagen können auch zur insbesondere thermischen Lebensmittelbehandlung, wie zum Pasteurisieren von Milch, verwendet werden.

Die Erfindung betrifft auch ein Heiz- oder Kühlanlagensystem mit einem Basisstellgerät zur Einstellung der Wärmetransferfluidströmung des Systems und ein Verfahren zur Einstellung einer Wärmetransferfluidströmung an einer Heiz- oder Kühlanlage mittels eines Basisstellgeräts.

Bekannte Basisstellgeräte umfassen ein Stellventil, mit dem das Basisstellgerät auf die Wärmetransferfluidströmung zugreift, um die Durchflussmenge des Wärmetransferfluids zu beeinflussen. Das Wärmetransferfluid kann von einer Wärmequelle und/oder zu einer Wärmesenke fließen. Dabei kommt als Wärmequelle zum Beispiel eine Wärmepumpe, ein Blockheizkraftwerk, eine thermische Solaranlage, eine Geothermieanlage oder dergleichen in Betracht. Als Kältequelle kann beispielsweise ein Kühlturm, eine Kältemaschine oder dergleichen vorgesehen sein.

Bei einem gattungsgemäßen Basisstellgerät ist an dem Stellventil ein Stellantrieb zum Verfahren beziehungsweise Verstellen des Stellventils angebaut und ein Prozessregler vorgesehen, der an dem Stellventil oder dem Stellantrieb angebaut sein kann. Insbesondere kann der Prozessregler in dem Stellventil oder dem Stellantrieb eingebaut sein, um eine besonders kompakte Bauweise zu realisieren. Der Prozessregler kann dazu ausgelegt sein, einen Heiz- oder Kühlprozess der Heiz- oder Kühlanlage zu regeln, und ist vorzugsweise als ein Stellungsregler ausgeführt, der zumindest einen Stellantrieb eines Stellventils steuert. Der Prozessregler hat einen Steuersignalausgang zum Übertragen eines Ventilstellsignals an den Stellantrieb. Der Prozessregler ist dazu ausgelegt, anhand wenigstens einer Heiz- oder Kühlanlagen-Betriebsgröße mittels eines Regelungsalgorithmus ein Ventilstellsignal zu erzeugen. Als Heiz- oder Kühlanlagen-Betriebsgröße zur Erzeugung des Ventilstellsignals kann insbesondere eine Temperatur, ein Druck, eine Durchflussmenge oder dergleichen dienen. Der Prozessregler kann eine in der Heiz- oder Kühlanlage messbare Ist-Betriebsgröße mit einer vorgegebenen Soll-Betriebsgröße zur Erzeugung des Ventilstellsignals vergleichen, wie eine mit einem Temperatursensor in einem Wohnraum gemessene Temperatur und eine an einem Thermostat vorgegebene Soll-Temperatur für den Wohnraum.

Ein zur Verwendung in einer Heiz- oder Kühlanlage geeignetes Basisstellgerät ist beispielsweise von DE 20 2013 005 861 U1 bekannt. Das an sich bewährte Basisstellgerät umfasst ein Stellventil zum Einstellen einer Fluidströmung durch einen thermischen Verbraucher, einen im Vorlauf und einen im Nachlauf des Verbrauchers angeordneten Temperatursensor und eine Regelungselektronik zum Ansteuern eines Stellantriebs des Stellventils. Anhand der mit den Temperatursensoren bestimmten Ist-Temperaturwerten und einer manuell vorgebbaren Nachlauf-/Vorlauftemperatur-Soll-Differenz stellt das Basisstellgerät den Durchlassquerschnitt des Stellventils ein. Das bekannte Basisstellgerät eignet sich aufgrund seiner kompakten Bauweise durch Integration von Stellantrieb und Regelungselektronik in einem unmittelbar an dem Stellventil befestigten Gehäuse besonders gut zur Verwendung in einer Heiz- oder Kühlanlage insbesondere für die Gebäudeklimatisierung.

US 6,276,264 B1 betrifft eine tragbare Pasteurisierungs- bzw. Fluidwärmebehandlungsvorrichtung.

Bei bekannten Basisstellgeräten hat sich gezeigt, dass bei kritischen Betriebszuständen, beispielsweise bei Annäherung des Ventilglieds des Stellventils an seine Schließstellung, die Regelung instabil werden kann, was üblicherweise durch Übersteuern des Stellventils in seine Schließstellung vermieden wird. Durch das Übersteuern bei kritischen Betriebszuständen ist durch herkömmliche Basisstellgeräte nur eine begrenzt genaue beziehungsweise schnelle Einstellbarkeit gewährleistet.

Es ist eine Aufgabe der Erfindung, die Nachteile des Standes der Technik zu überwinden, insbesondere ein kompaktes Basisstellgerät zur Einstellung einer Wärmetransferfluidströmung einer Heiz- oder Kühlanlage beispielsweise zur Gebäudeklimatisierung oder zur Lebensmittelbehandlung bereitzustellen, mit dem insbesondere bei kritischen Betriebsbedingungen eine feine und schnelle Einstellbarkeit der Wärmetransferfluidströmung realisierbar ist.

Diese Aufgabe wird gelöst durch die Merkmale der Ansprüche 1, 9 und 14.

Demnach weist der Prozessregler eines erfmdungsgemäßen Basisstellgeräts wenigstens einen zusätzlichen Steuersignalausgang auf, der insbesondere ein Stellsteuersignal für ein weiteres Stellventil sein kann. Der wenigstens eine zusätzliche Steuersignalausgang dient zum Übertragen eines Steuersignals an wenigstens einen weiteren Aktuator, insbesondere eine Pumpe oder ein weiteres Stellgerät der Heiz- oder Kühlanlage. Das weitere Stellgerät oder Zusatzstellgerät umfasst ein Stellventil und einen Stellantrieb zum Verfahren des Stellventils, kann aber im Gegensatz zu dem Basisstellgerät ohne Prozessregler ausgeführt sein. Die Regelung des weiteren Stellgeräts kann vorzugsweise vollständig durch den Prozessregler des Basisstellgeräts realisiert sein. Insbesondere ist das wenigstens eine weitere Stellgerät dazu ausgelegt, das weitere Stellsteuersignal von dem Prozessregler zum Verfahren beziehungsweise Verstellen des Stellventils des weiteren Stellgeräts in eine rein steuersignalabhängige Stellposition umzusetzen.

Bei einer bevorzugten Ausführung der Erfindung hat der Prozessregler des Basisstellgeräts wenigstens einen Ist-Signaleingang zum Empfangen jeweils einer Ist-Betriebsgröße der Heiz- oder Kühlanlage. Insbesondere kann der Prozessregler wenigstens zwei, vorzugsweise drei oder vier Signaleingänge aufweisen. Der wenigstens eine Ist-Signaleingang ist dazu ausgelegt, ein Messsignal zu empfangen, das eine Ist-Betriebsgröße repräsentiert, insbesondere eine Ist-Temperatur, ein Ist-Druck oder dergleichen. Der wenigstens eine Signaleingang des Prozessreglers kann binär oder analog, insbesondere zum Erfassen eines Strom- oder Spannungssignals, realisiert sein. Vorzugsweise empfängt der wenigstens eine Ist-Signaleingang einen Ist-Druckwert von einem Drucksensor oder -schalter zum Ermitteln einer Betriebsgröße des wenigstens einen weiteren Aktuators, insbesondere der Pumpe, oder eine Ist-Drehzahl von einem Encoder der Pumpe. Es sei klar, dass der Prozessregler je nach verwendetem Regelalgorithmus durchaus mehrere Betriebsgrößen der Heiz- oder Kühlanlage, etwa mehrere an unterschiedlichen Stellen der Anlage gemessene Ist-Temperaturen oder physikalisch unterschiedliche Größen, wie eine Soll-Temperatur und einen Ist-Druck, zur Regelung heranziehen kann.

Bevorzugt weist der Prozessregler des Basisstellgeräts wenigstens einen Soll-Signaleingang auf, der dazu ausgebildet ist, wenigstens eine Soll-Betriebsgröße zu empfangen. Die wenigstens eine Soll-Betriebsgröße kann von einer Leitwarte erzeugt sein. Insbesondere kann das Basisstellgerät eine vorzugsweise bidirektionale Modbus-Schnittstelle zur Übertragung der wenigstens einen Soll-Betriebsgröße von der Leitwarte an den Prozessregler aufweisen. Besonders bevorzugt umfasst das Basisstellgerät eine galvanische Trennung der Modbus-Schnittstelle von dem Prozessregler.

Vorzugsweise hat das Basisstellgerät wenigstens eine Schnittstelle zum manuellen Eingeben der wenigstens einen Soll-Betriebsgröße, vorzugsweise ein Bedienpaneel, insbesondere mit einem Drehgeber oder wenigstens einer Taste, und/oder eine Schnittstelle mit einer Empfangs- oder Transceivereinheit zur berührungslosen Kommunikation insbesondere mittels Bluetooth zum Empfangen der wenigstens einen Soll-Betriebsgröße. Eine derartige Empfangs- oder Transceivereinheit kann vorzugsweise Signale berührungslos mittels NFC (Near Field Communication), WLan bzw. WIFI oder dergleichen empfangen. Der wenigstens eine Soll-Signaleingang kann ein digitales oder analoges, beispielsweise Strom- oder Spannungssignal empfangen. Es sei klar, dass der Prozessregler des Basisstellgeräts auch weitere Signaleingänge, insbesondere einen Fehlersignaleingang, aufweisen kann.

Bei einer weiteren bevorzugten Ausführung des erfindungsgemäßen Basisstellgeräts umfasst der Prozessregler wenigstens einen Reglerbaustein, wobei ein erster Reglerbaustein dazu ausgelegt ist, den Regelalgorithmus zum Erzeugen des Ventilstellsignals auszuführen, und wobei vorzugsweise ein zweiter Reglerbaustein dazu ausgelegt ist, anhand wenigstens einer Heiz- oder Kühlanlagen-Betriebsgröße, wie Temperatur, Druck, Durchflussmenge oder dergleichen, mittels eines vorzugsweise anderen Regelalgorithmus ein Steuersignal für den wenigstens einen weiteren Aktuator zu erzeugen. Der Prozessregler kann also einen ersten Reglerbaustein umfassen, der dazu ausgelegt ist, das Ventilstellsignal zu erzeugen und einen zweiten Reglerbaustein umfassen, der sich vorzugsweise von dem ersten Reglerbaustein unterscheidet und dazu ausgelegt ist, wenigstens ein weiteres Steuersignal für den zusätzlichen Steuersignalausgang zu erzeugen. Grundsätzlich kann ein erster Reglerbaustein und ein zweiter Reglerbaustein sowie eventuelle weitere Reglerbausteine ihren jeweiligen Regelalgorithmus anhand der gleichen Betriebsgröße der Heiz- oder Kühlanlage durchführen. Es ist auch denkbar, dass unterschiedliche Betriebsgrößen der Heiz- oder Kühlanlage von unterschiedlichen Reglerbausteinen verwendet werden. Beispielsweise können an einem ersten Reglerbaustein als Eingabewert zwei an unterschiedlichen Stellen in der Anlage ermittelte Ist-Tempertaturen vorgegeben sein und an dem zweiten Reglerbaustein eine an einer weiteren Stelle der Anlage ermittelte dritte Ist-Temperatur sowie ein Temperatur-Sollwert eingegeben werden. Vorzugsweise umfasst der Prozessregler wenigstens zwei, insbesondere genau zwei, Reglerbausteine und jeder Reglerbaustein realisiert eine vorbestimmte Regelungsroutine.

Insbesondere kann ein erster und/oder zweiter Reglerbaustein dazu ausgelegt sein, in Abhängigkeit von einem Betriebszustand der Kühl- oder Heizanlage den jeweiligen Regelalgorithmus auszuführen. Dabei kann in Abhängigkeit von dem Betriebszustand der erste Regler aktiv und der zweite Regler inaktiv sein. Alternativ kann der erste Regler inaktiv und der zweite Regler aktiv sein. Beispielsweise kann der Prozessregler in einem unkritischen Betriebszustand, wie bei einem weit geöffneten Stellventil, einen aktiven Reglerbaustein zum Erzeugen des Ventilstellsignals und einem inaktiven Reglerbaustein zum Erzeugen des Steuersignals für den weiteren Aktuator aufweisen. Befindet sich die Kühl- oder Heizanlage beispielsweise in einem kritischen Betriebszustand, etwa wenn sich das Ventilglied des Stellventils nahe seiner Schließstellung befindet, kann der Regler zum Erzeugen des Ventilstellsignals inaktiv sein, so dass das Stellventil vorzugsweise nicht übersteuert wird, und der zweite Regler aktiviert sein, um den wenigstens einen zusätzlichen Aktuator mit dem wenigstens einen weiteren Steuersignal zu versorgen. Beispielsweise kann in dem kritischen Betriebszustand der zweite Regler eine Pumpe zur Förderung einer Wärmetransferfluidströmung ansteuern.

Bei einer bevorzugten Weiterbildung der Erfindung kann der zweite Regler dazu ausgelegt sein, anhand eines Ausgabesignals des ersten Reglers das Steuersignal zu erzeugen. Der Prozessregler kann insofern eine Kaskadenregelung umfassen, bei der der erste Reglerbaustein anhand von Heiz- oder Kühlanlagen-Betriebsgrößen einen Ausgabewert erzeugt, der als Eingabesignal für den zweiten Reglerbaustein dient, so dass der zweite Reglerbaustein anhand des Ausgabesignals des ersten Reglerbausteins und ggf. einer Anlagenbetriebsgröße ein zweites Ausgabesignal erzeugt, insbesondere das Steuersignal für den wenigstens einen zusätzlichen Aktuator. Vorzugsweise realisieren die wenigstens zwei Reglerbausteine eine Kaskadenregelung. Insbesondere sind die wenigstens zwei Reglerbausteine dazu ausgelegt für vorzugsweise genau einen Aktuator, wie das Stellventil des Basisstellgeräts oder einen Zusatzaktuator, ein Steuersignal zu erzeugen.

Bevorzugt umfasst der Prozessregler einen Komparator, der dazu ausgelegt ist, wenigstens zwei Steuersignale zu empfangen, insbesondere ein von dem ersten Regelbaustein des Prozessreglers generiertes Ventilstellsignal und ein von dem zweiten Regelbaustein des Prozessreglers erzeugtes Steuersignal für den wenigstens einen zusätzlichen Aktuator. Insbesondere ist der Komparator zum Empfangen von zumindest dem Ventilstellsignal und/oder einer Kühl- oder Heizanlagen-Betriebsgröße, wie einer Fehlermeldung, ausgelegt sowie dazu, anhand der empfangenen Signale Steuersignale auszugeben. Insbesondere gibt der Komparator das kleinste oder das größte der wenigstens zwei empfangenen Steuersignale aus. Insbesondere empfängt der Komparator von je einem Reglerbaustein genau ein Steuersignal. Der Komparator kann auch dazu ausgelegt sein, das Steuersignal eines Reglerbausteins dann auszugeben, wenn er eine Fehlermeldung empfängt bzw. das Steuersignal eines anderen Reglerbausteins dann weiterzugeben, wenn er keine Fehlermeldung empfängt.

Vorzugsweise umfasst das Basisstellgerät einen Timer zum Bereitstellen einer Ist-Zeit, wie einer Ortszeit oder einer Zeit ab Erreichen eines vorbestimmten Betriebszustands der Heiz- oder Kühlanlage. Beispielsweise kann der Timer die verstrichene Ist-Zeit ab dem Erreichen eines Schwellenwerts messen, beispielsweise einer vorbestimmten Ist-Temperatur eines bestimmten Temperatursensors der Anlage, oder einer Eingabe, etwa einem manuellen Knopfdruck oder einem von einer Leitwarte bereitgestellten Startsignal.

Vorzugsweise umfasst das Basisstellgerät eine Speichereinheit für wenigstens eine Kühl- oder Heizanlagen-Betriebsgröße, insbesondere für wenigstens eine Ist-Temperatur und/oder für > 1 anhand von wenigstens einem Betriebsparameter ermittelte Werte, wie Basisstellgerät-Zustandsdaten, insbesondere Diagnosedaten, vorzugsweise eine Anzahl von Hubbewegungen des Stellventils, eine Anzahl von Anfahr- und/oder Abfahrvorgängen, wie Initiierungsvorgängen oder Abschaltvorgängen. Beispielsweise kann das Basisstellgerät dazu ausgelegt sein, in seiner Speichereinheit basierend auf wenigstens einer Ist-Temperatur, einem Ist-Druck und/oder einem Ist-Durchfluss, die der Speichereinheit gespeichert sein können, Diagnosedaten, wie den aktuellen Energieverbrauch eines thermischen Verbrauchers oder den Energiekonsum des thermischen Verbrauchers innerhalb eines bestimmten Zeitraums zu ermitteln und in der Speichereinheit zu hinterlegen.

Insbesondere kann in der Speichereinheit wenigstens eine vorbestimmte Prozessregler-Konfiguration hinterlegt sein, insbesondere für wenigstens eine vordefinierte Heiz- oder Kühlanlagenart. Beispielsweise können Prozessregler-Konfigurationen zur Verwendung des Basisstellgeräts zur lokalen Einstellung einer Wärmetransferfluidströmung in einer Wohnung, einer Etage oder einem Haus vorgesehen sein, das mittels einem Fernwärmenetz oder Fernkältenetz thermisch versorgt ist. Eine andere Prozessregler-Konfiguration kann beispielsweise vorgesehen sein für das Beheizen oder Kühlen eines Wärmeabgabe- oder -aufnahmefluids eines thermischen Verbraucherkreislaufs, das über einen Wärmetauschkreislauf mit einem darin vorgesehenen Übertragungsfluid von einer Wärmequelle oder Wärmesenke versorgt wird. Eine weitere Prozessregler-Konfiguration kann vorgesehen sein für einen thermischen Verbraucher in Form eines Tanks, der mittels eines Heiz- oder Kühlfluids thermisch versorgt ist, beispielsweise zur Lebensmittelbehandlung, wie zum Pasteurisieren von Milch.

Eine vorbestimmte Prozessregler-Konfiguration kann auch zusätzlich oder alternativ wenigstens eine Soll-Betriebsgröße zur Steuerung des Prozessreglers hinterlegt haben. Insbesondere können eine Reihe von Soll-Betriebsgrößen zur Steuerung des Prozessreglers in Abhängigkeit von einer Reihe den Soll-Betriebsgrößen zugeordneten Bedingungen, insbesondere Soll-Zeiten oder anderen Soll-Betriebsgrößen, in der Speichereinheit hinterlegt sein. Zum Beispiel kann in einer Speichereinheit vorzugsweise zur Vorgabe von Soll-Betriebsgrößen zum Anfahren oder Abfahren der Anlage eine Reihe von Soll-Temperaturen vorgegeben sein, die bestimmten Soll-Zeiten zugeordnet sind. In diesem Fall kann insbesondere das Basisstellgerät dazu ausgelegt sein, ein Initiierungssignal von einer Leitwarte oder einem Bedienpaneel zu empfangen und daraufhin, basierend auf wenigstens einer Ist-Temperatur und der vorkonfigurierten Reihe von Soll-Temperaturen für vorkonfigurierte Soll-Zeiten mittels einem Regelungsalgorithmus ein Steuersignal zu erzeugen. Auf diese Weise kann dem Basisstellgerät ein Initiierungssignal vorgegeben werden, durch das die Anlage veranlasst ist, ein Anfahrprogramm durchzuführen, ohne dass das Anfahren des Basisstellgeräts bzw. der dadurch eingestellten Wärmetransferfluidströmung durch die Leitwarte oder den Benutzer überwacht oder im Einzelnen gesteuert werden braucht. Insbesondere schaltet das Basisstellgerät bei Erreichen des Endes der Soll-Temperatur/Zeit-Reihe in einen anderen Betriebszustand. Eine Reihe von in der Speichereinheit hinterlegten Soll-Betriebsgrößen und zugeordneten Bedingungen kann auch für andere Heiz- oder Kühlanlagen, wie Anlagen zum insbesondere thermischen Härten von Werkstoffen, Behandeln von Lebensmitteln, wie dem Pasteurisieren, oder dergleichen verwendet werden. Dadurch ist das erfindungsgemäße Basisstellgerät vielseitig einsetzbar und gewährleistet nichtsdestotrotz eine einfache Bedienung.

Bei einer Weiterbildung der Erfindung weist die Speichereinheit wenigstens zwei vorbestimmte Prozessregler-Konfigurationen auf. Insbesondere weist die Speichereinheit genau zwei vorbestimmte Prozessregler-Konfigurationen auf. Bei dieser bevorzugten Weiterbildung der Erfindung weist der Prozessregler einen Konfigurationsselektor auf, der dazu ausgelegt ist, den Prozessregler gemäß einer vorbestimmten, auf der Speichereinheit hinterlegten Prozessregler-Konfiguration zu konfigurieren.

Insbesondere ist ein Konfigurationsselektor zum Erkennen des wenigstens einen vorbestimmten Betriebszustands ausgestaltet. Der Konfigurationsselektor kann Teil des Prozessreglers sein, vorzugsweise in Form eines Reglerbausteins. Für jeden Betriebszustand kann der Prozessregler insbesondere durch den Konfigurationsselektor gemäß einer vorbestimmten Prozessregler-Konfiguration derart konfiguriert werden, dass der Prozessregler gemäß einer vorbestimmten Regelungsroutine arbeitet.

Bei einer Weiterbildung der Erfindung erkennt der Konfigurationsselektor einen vorbestimmten Betriebszustand, wie das Über- oder Unterschreiten eines Betriebsgrößen-Schwellenwerts, wie eines Zeit-Schwellenwerts, eines Temperatur-Schwellenwerts oder dergleichen, durch eine Ist-Betriebsgröße, insbesondere eine Ist-Zeit, eine Ist-Temperatur oder dergleichen, oder das Eintreten eines Fehlers, und konfiguriert den Prozessregler abhängig von dem erkannten Betriebszustand gemäß einer der vorbestimmten Prozessregler-Konfigurationen.

Bei einer bevorzugten Ausführung der Erfindung hat das Basisstellgerät wenigstens eine Ausgabeeinheit zum Ausgeben von wenigstens einer Betriebsgröße und/oder von anhand von wenigstens einer Betriebsgröße ermittelten Werten. Insbesondere kann als Ausgabeeinheit eine Anzeige, wie ein LCD-Display oder ein Signalausgang, wie eine bidirektionale Modbus-Schnittstelle, eine Bluetooth-Schnittstelle oder eine Schnittstelle für NFC (Near Field Communication), WLAN bzw. WIFI oder dergleichen vorgesehen sein. Anhand von wenigstens einer Betriebsgröße kann insbesondere ein Ist-Energieverbrauch und/oder vorzugsweise ein durchschnittlicher Energieverbrauch oder Energiekonsum insbesondere innerhalb eines Zeitraums ausgebbar sein. Vorzugsweise kann auch ein Vergleichswert eines Energieverbrauchs oder Energiekonsums gegenüber einem Referenzverbrauch- oder -konsumwert über die Ausgabeeinheit von dem Basisstellgerät ausgebbar sein.

Bei einer besonders bevorzugten Ausführungsform des erfindungsgemäßen Basisstellgeräts sind in einem Gehäuse der Stellantrieb und der Prozessregler angeordnet. Dieses Gehäuse ist insbesondere ortsfest an dem Stellventil angebaut, insbesondere angeflanscht oder mittels einer Mutter angeschraubt. Das Gehäuse kann vorzugsweise mit dem Ventilgehäuse in funktionsunion ausgebildet sein, sodass der Prozessregler in dem Ventil eingebaut ist. Auf diese Weise wird eine besonders kompakte Ausführung des Basisstellgeräts realisiert, die sich insbesondere gut für Wohnhäuser und das Nachrüsten bestehender Heiz- und/oder Kühlanlagen eignet. Das Gehäuse des Basisstellgeräts kann mehrere Kompartimente umfassen, in denen beispielsweise der Stellantrieb, der Prozessregler oder einzelne Teile des Prozessreglers voneinander räumlich getrennt angeordnet sind. Insbesondere ist das Gehäuse ausgelegt für eine Schutzart bzw. Schutzklasse gemäß IP54. Zu diesem Zweck kann das Gehäuse staubund/oder wasserdicht sein. vorzugsweise ist das Gehäuse explosionssicher und/oder mit einer Gewindeverbindung an dem Stellventil montiert.

Es sei klar, dass das erfindungsgemäße Basisstellgerät dazu ausgelegt sein kann, das unten genannte Verfahren zur Einstellung einer Wärmetransferfluidströmung in einer Heiz- oder Kühlanlage auszuführen.

Bei einer bevorzugten Weiterbildung der Erfindung ist an dem Gehäuse wenigstens eine Ausgabeeinheit und/oder wenigstens eine Schnittstelle angeordnet. Insbesondere umfasst das Gehäuse wenigstens eine vorzugsweise abgedichtete Öffnung für Kabel zur signalübertragungsgemäßen Verbindung des Prozessreglers mit Sensoren zum Erfassen von Ist-Betriebsgrößen und/oder mit einer Leitwarte oder dergleichen. An der Außenseite des Gehäuses kann auch ein Bedienpaneel mit Knöpfen und/oder wenigstens einem Drehgeber vorgesehen sein.

Die Erfindung betrifft auch ein Heiz- oder Kühlanlagensystem beispielswiese zur Gebäudeklimatisierung oder zur Lebensmittelbehandlung, wie zum Pasteurisieren von Milch. Ein derartiges Heiz- oder Kühlanlagensystem umfasst üblicherweise wenigstens einen thermischen Verbraucher, wie einen Heiz- oder Kühlkörper. Der thermische Verbraucher kann insbesondere ein Wärmeverbraucher sein, vorzugsweise ein Heizkörper oder ein Heizkreislauf, der einen Tank und ein damit verbundenes Leitungssystem für ein Wärmeabgabefluid umfasst. Der thermische Verbraucher kann aber auch als Kälteverbraucher realisiert sein, beispielsweise als Kühlkörper, Kühldecke, Kühlkreislauf oder dergleichen. Ein Heiz- oder Kühlanlagensystem umfasst insbesondere bei Ausführung des Verbrauchers als Wärmeverbraucher eine Wärmequelle, die die thermische Energie für den thermischen Verbraucher bereitstellt und/oder, bei Ausführung des Verbrauchers als Kälteverbraucher eine Wärmesenke, die die thermische Energie aufnimmt.

Das Heiz- oder Kühlanlagensystem umfasst außerdem eine Wärmezuführleitung zum Transport einer Wärmetransferfluidströmung von einer Wärmequelle zum thermischen Verbraucher und/oder einer Wärmeabführleitung zum Transport der Wärmetransferfluidströmung von dem thermischen Verbraucher zu einer Wärmesenke. Vorzugsweise realisiert eine einzige Leitung im Vorlauf des thermischen Verbrauchers die Wärmezuführleitung und im Nachlauf des thermischen Verbrauchers die Wärmeabführleitung. Das Heiz- oder Kühlanlagensystem umfasst darüber hinaus ein Basisstellgerät zur Einstellung der Wärmetransferfluidströmung, einen Stellantrieb zum Einstellen des Stellventils und einen an dem Stellventil oder dem Stellantrieb angebauten Prozessregler zum Ansteuern des Stellantriebs. Der Prozessregler kann auch in dem Stellventil oder dem Stellantrieb eingebaut sein, sodass eine besonders kompakte Bauweise realisiert ist. Das Basisstellgerät kann insbesondere gemäß dem erfindungsgemäßen Basisstellgerät ausgeführt sein. Es sei klar, dass das erfindungsgemäße Heiz- oder Kühlanlagensystem mit dem erfindungsgemäßen Basisstellgerät ausgestattet sein kann.

Vorzugsweise umfasst das Heiz- oder Kühlanlagensystem wenigstens zwei voneinander getrennte Wärmetransferfluidkreisläufe, insbesondere einen mit einem Heiz- oder Kühlfluid gefüllten Wärmezuführ- oder -abführkreislauf, der durch die Wärmequelle direkt mit thermischer Energie versorgt wird oder aus dem direkt in die Wärmesenke thermische Energie abgegeben wird, sowie einen Verbraucherkreislauf mit einem darin enthaltenen Wärmeaufnahme- oder -abgabefluid, das direkt mit dem thermischen Verbraucher interagiert, um diesem Wärmeenergie zu- oder abzuführen. Vorzugsweise sind die wenigstens zwei Wärmetransferfluidkreisläufe fluidisch voneinander getrennt, das Heiz- oder Kühlfluid und das Wärmeabgabe- oder -aufnahmefluid kommen also miteinander nicht direkt in Kontakt und können sich insbesondere nicht vermischen, sondern sind vorzugsweise voneinander durch eine Barriere wie eine Rohrwandung getrennt. Als Wärmetransferfluid kommen beispielsweise Flüssigkeiten wie Wasser oder Öl, insbesondere destilliertes oder deionisiertes Wasser, oder Alkohol in Frage. Ein Wärmetransferfluid kann auch durch einen Dampf oder Luft, insbesondere feuchte Luft, realisiert sein. Zur Verwendung für Kühlanlagen kommen insbesondere auch spezielle Kühlmittel als Wärmetransferfluid in Frage.

Erfindungsgemäß hat das Heiz- oder Kühlanlagensystem einen weiteren durch den Prozessregler des Basisstellgeräts betätigten Aktuator, wie eine Pumpe oder ein weiteres Stellgerät beziehungsweise Zusatzstellgerät.

Bei einer bevorzugten Ausführung der Erfindung ist ein Wärmetauscherkreislauf zur wärmeübertragungsgemäßen Verbindung der Wärmequelle und/oder der Wärmesenke mit dem thermischen Verbraucher vorgesehen. In dem Wärmetauscherkreislauf ist vorzugsweise ein von dem Heiz- oder Kühlfluid und dem Wärmeabgabe- oder -aufnahmefluid des Verbrauchers unterschiedliches Wärmeübertragungsfluid enthalten. Insbesondere weist der Wärmetauscherkreislauf einen wärmeübertragungsgemäß mit der Wärmezuführleitung und/oder der Wärmeabführleitung gekoppelten Wärmetauscher auf. Vorzugsweise ist das Wärmeübertragungsfluid fluidisch und/oder räumlich von dem Heiz- oder Kühlfluid und/oder dem Wärmeabgabe- oder -aufnahmefluid getrennt.

Bevorzugt umfasst das Heiz- oder Kühlanlagensystem wenigstens einen Temperatursensor zum Erfassen wenigstens einer Ist-Temperatur. Der wenigstens eine Temperatursensor kann in der Wärmezuführleitung, der Wärmeabgabeleitung oder dem Wärmetauscherkreislauf, insbesondere in einer Wärmeübertragungsfluidleitung zwischen dem Wärmetauscher und dem thermischen Verbraucher, angeordnet sein. Der wenigstens eine Temperatursensor kann auch in dem thermischen Verbraucher bzw. einem Verbraucherkreislauf oder der Umgebung des thermischen Verbrauchers oder Verbraucherkreislaufs angeordnet sein. Vorzugsweise umfasst das Heiz- oder Kühlanlagensystem wenigstens zwei Temperatursensoren, insbesondere drei oder vier, wobei jeder Temperatursensor einer anderen Stelle und/oder einem anderen Wärmetransferfluid des Heiz- oder Kühlanlagensystems zugeordnet ist. Vorzugsweise erfasst der wenigstens eine Temperatursensor eine Ist-Temperatur für den Prozessregler des Basisstellgeräts. Anstelle des wenigstens einen Temperatursensors kann alternativ ein anderer Sensor zum Erfassen einer Betriebsgröße vorgesehen sein. Vorzugsweise weist das Heiz- oder Kühlanlagensystem zwei, drei oder vier Sensoren auf.

Bei einer bevorzugten Ausführung der Erfindung ist der wenigstens eine weitere Aktuator des Heiz- oder Kühlanlagensystems in der Wärmezuführleitung, der Wärmeabgabeleitung, dem Wärmetauscherkreislauf oder dem Verbraucherkreislauf angeordnet. Vorzugsweise ist der wenigstens eine weitere Aktuator als Pumpe zur Förderung eines Wärmetransferfluids realisiert. Der wenigstens eine weitere Aktuator kann als auch ein weiteres Stellgerät realisiert sein, das ein Stellventil und einen Stellantrieb zum Betätigen des Stellventils umfasst. Vorzugsweise sind in dem Heiz- oder Kühlanlagensystem zwei, drei oder mehr weitere Aktuatoren neben dem Stellventil des Basisstellgeräts vorgesehen. Auf diese Weise kann das Heiz- oder Kühlanlagensystem mittels des Basisstellgeräts besonders präzise geregelt werden. Vorzugsweise ist der wenigstens eine weitere Aktuator von dem Basisstellgerät energetisch versorgt.

Bei einer bevorzugten Ausführung der Erfindung weist das Heiz- oder Kühlanlagensystem eine Leitwarte zur Steuerung wenigstens eines Basisstellgeräts auf, wobei die Leitwarte zur Übertragung wenigstens einer Soll-Betriebsgröße signalübertragungsgemäß mit dem Basisstellgerät verbunden ist. Von der Leitwarte kann dem Prozessregler beispielsweise ein 0 bis 10 V oder ein 4 bis 20 mA Leitsignal vorgegeben werden. Die Verbindung der Leitwarte mit dem wenigstens einem Basisstellgerät kann insbesondere zur bidirektionalen Kommunikation vorzugsweise mittels Modbus-Standard ausgelegt sein. Vorzugsweise ist die Leitwarte mit dem Basisstellgerät per Internet, Ethernet oder dergleichen verbunden. Mit einer einzigen Leitwarte können auch mehrere Basisstellgeräte gesteuert werden, beispielsweise kann in einem zentral gesteuerten Fernwärmenetz eine Leitwarte vorgesehen sein, und jeder Abnehmer, d.h. jedes Haus bzw. jeder Haushalt, der an dem Fernwärmenetz angeschlossen ist, kann ein Basisstellgerät aufweisen. Auf diese Weise kann mittels der Leitwarte eine gleichmäßige thermische Versorgung der Abnehmer gewährleistet werden und Energieversorgungsspitzen oder Energieversorgungssenken können abgedämpft werden.

So kann gegebenenfalls vermieden werden, dass aufgrund des Druckunterschieds in dem Fernwärmenetz nahe an einer Wärmequelle angeordnete Abnehmer wesentlich mehr Fernwärme erhalten als weiter von der Wärmequelle entfernte Abnehmer. Vorzugsweise kann ein Differenzdruckregler Typ 2488 eingesetzt werden, der insbesondere als Typ 2488 (Samson) bezeichnet ist. In Kombination mit dem Prozessregelantrieb ergibt sich eine sehr kompakte Einheit für Fernwärme- bzw. Femkälte-Regelaufgaben, insbesondere zur:
[a] Regelung des Differenzdruckes;
[b] Einhaltung des maximalen Volumenstroms;
[cl] witterungsgeführten Regelung mittels Motorblende, (auch Typ 5724-8 (Samson) Fernheizung); oder
[c2] Netz- und Verbraucher-Einflussnahme auf die Sekundärtemperatur (Typ 5724-8 (Samson) Fernkälte).

Die Erfindung betrifft ferner ein Verfahren beziehungsweise eine Methode zur Einstellung einer Wärmetransferfluidströmung in einer Heiz- oder Kühlanlage beispielsweise zur Gebäudeklimatisierung oder zur vorzugsweise thermischen Lebensmittelbehandlung, wie zum Pasteurisieren von Milch. Das Verfahren umfasst einen ersten Regelungsalgorithmus zum Erzeugen eines Ventilstellsignals zum Stellen eines Stellventils der Heiz- oder Kühlanlage anhand wenigstens einer Heiz- oder Kühlanlagenbetriebsgröße, wie Temperatur, Druck, Durchflussmenge oder dergleichen. Erfindungsgemäß umfasst das Verfahren einen zweiten Regelungsalgorithmus zum Erzeugen eines weiteren Steuersignals für einen weiteren Aktuator der Heiz- oder Kühlanlage, wie eine Pumpe oder ein weiteres Stellgerät beziehungsweise Zusatzstellgerät, anhand wenigstens einer Betriebsgröße der Heiz- oder Kühlanlage.

Vorzugsweise wird in dem Verfahren wenigstens eine Ist-Betriebsgröße durch Sensoren in der Wärmetransferfluidströmung gemessen, wobei insbesondere zwei oder drei Ist-Betriebsgrößen, insbesondere wenigstens eine Ist-Temperatur und/oder wenigstens ein Ist-Druck, gemessen wird in einer Wärmezuführleitung, einer Wärmeabgabeleitung, einem Wärmetauscherkreislauf, insbesondere einer Wärmeübertragungsfluidleitung zwischen einem Wärmetauscher und einem thermischen Verbraucher, in einem thermischen Verbraucher oder in einem Verbraucherkreislauf und/oder in einer Umgebung des Verbrauchers. Zur Messung einer Ist-Betriebsgröße an einer Messstelle kann je ein Sensor vorgesehen sein. Insbesondere werden zwei, drei oder vier Ist-Betriebsgrößen von je einem Sensor gemessen.

Vorzugsweise wird in dem Verfahren wenigstens eine Soll-Betriebsgröße bereitgestellt durch eine manuelle Eingabe insbesondere an dem Basisstellgerät und/oder von einer Leitwarte und/oder berührungslos, insbesondere mittels Bluetooth, NFC, WLAN bzw. WIFI oder dergleichen. In dem Verfahren können auch mehrere Soll-Betriebsgrößen bereitgestellt werden. Beispielsweise kann eine erste Soll-Betriebsgröße von einer Leitwarte bereitgestellt werden und eine zweite Betriebsgröße kann mittels Bluetooth bereitgestellt werden. Auf diese Weise lässt sich das Verfahren durch unterschiedliche Benutzer, beispielsweise Wartungspersonal, Hausbewohner und/oder das Überwachungspersonal eines Fernwärmenetzbetreibers steuern. Jeder Benutzer hat dabei eine eigene Benutzerschnittstelle zur Steuerung desselben Verfahrens zur Verfügung, die auf die jeweiligen individuellen Bedürfnisse abgestimmt sein kann.

Vorzugsweise wird in einem Regelalgorithmus des erfindungsgemäßen Verfahrens, insbesondere in dem ersten oder dem zweiten Regelalgorithmus oder einem weiteren Regelalgorithmus ein Mittelwert aus wenigstens zwei Ist-Betriebsgrößen gebildet und/oder eine Differenz zwischen wenigstens zwei Ist-Betriebsgrößen berechnet und/oder eine Differenz zwischen einer Ist-Betriebsgröße und einer Soll-Betriebsgröße berechnet. Insbesondere kann in einem Regelalgorithmus eine digitale PD-, PI- und/oder PID-Regelung realisiert sein.

Bei einer bevorzugten Ausführung eines erfindungsgemäßen Verfahrens verwendet ein Regelalgorithmus, insbesondere der zweite Regelalgorithmus, einen Ausgabewert eines anderen Regelalgorithmus, insbesondere des ersten Regelalgorithmus, als Eingabesignal. Das erfindungsgemäße Verfahren kann kaskadenartig gekoppelte Regelalgorithmen verwenden. Vorzugsweise wird in dem Verfahren ein Steuersignal, insbesondere ein Ventilstellsignal, als Komparator-Ausgabesignal erzeugt von einem Komparator des Prozessreglers in Abhängigkeit von Ausgabewerten von wenigstens zwei Regelalgorithmen, insbesondere dem ersten und dem zweiten Algorithmus, oder in Abhängigkeit von einer Betriebsgröße, insbesondere einem Schwellenwert oder einem Fehlersignal.

Bevorzugt kann ein Regelalgorithmus vorgesehen sein, der ein Steuersignal basierend auf einem Leitsignal der Leitwarte erzeugt und ein zweiter Regelalgorithmus, der ein Steuersignal basierend auf einer gespeicherten Soll-Betriebsgröße erzeugt, wobei beide Steuersignale in einen Komparator gespeist werden, von dem erkannt wird, ob ein Leitsignal innerhalb eines zulässigen Bereichs, beispielsweise zwischen 2 und 10 V, zur Steuerung des Stellgeräts vorliegt, wobei von dem Komparator bei Vorliegen eines zulässigen Leitsignals das auf dem Leitsignal basierende Steuersignal und andernfalls das von dem zweiten Regelalgorithmus generierte Steuersignal weitergeleitet wird.

Vorzugsweise wird von dem Komparator als Komparator-Ausgabesignal der Ausgabewert bzw. das Steuersignal von einem der wenigstens zwei Regelalgorithmen weitergegeben. Vorzugsweise erzeugt der Komparator als Ausgabesignal ein Steuersignal, das dem kleinsten oder dem größten Ausgabewert der wenigstens zwei Regelalgorithmen entspricht. Beispielsweise kann zur Einstellung einer Wärmetransferfluidströmung einer Kühlanlage vorgesehen sein, dass ein erster Regelalgorithmus ein erstes Steuersignal basierend auf einem Leitsignal erzeugt und ein zweiter Regelalgorithmus ein zweites Steuersignal unabhängig von der Leitwarte, basierend auf in dem Prozessregler vorliegenden Betriebsgrößen erzeugt und der Komparator nur das kleinere der beiden Steuersignale an einem Aktuator, insbesondere den Stellantrieb des Basisstellgeräts, weiterleitet. So wird mit dem Basisstellgerät gewährleistet, dass von zwei Steuersignalen stets das ausgewählt wird, welches zu einem niedrigeren Verbrauch führt. Es kann aber auch dasjenige Steuersignal bevorzugt werden, welches eine schnellere Regelung bewirkt.

Bei einer bevorzugten Ausführung eines erfindungsgemäßen Verfahrens wird von dem Prozessregler wenigstens ein vorbestimmter Betriebszustand erkannt, beispielsweise an einer Soll-Betriebsgröße, wie einer manuellen Eingabe, einem Betriebsgrößen-Schwellenwert, insbesondere einer Ist-Zeit, einer Ist-Temperatur oder einem Fehler, wobei der Prozessregler in Abhängigkeit von dem wenigstens einen vorbestimmten Betriebszustand wenigstens eine vorbestimmte Prozessregler-Konfiguration auswählt. Die wenigstens eine Prozessregler-Konfiguration kann wenigstens eine vorkonfigurierte Soll-Betriebsgröße umfassen, insbesondere eine Reihe von Soll-Betriebsgrößen zur Steuerung des Prozessreglers in Abhängigkeit von einer Reihe von Bedingungen, die den Soll-Betriebsgrößen zugeordnet sind, insbesondere Soll-Zeiten oder anderen Soll-Betriebsgrößen. Die Erkennung des wenigstens einen vorbestimmten Betriebszustands kann durch einen Konfigurationsselektor des Prozessreglers erfolgen, um die wenigstens eine vorbestimmte Prozessregler-Konfiguration für den Prozessregler auszuwählen.

Die wenigstens eine Prozessregler-Konfiguration kann wenigstens einen vorkonfigurierten Regelungsalgorithmus umfassen. Bei einer Weiterbildung des erfindungsgemäßen Verfahrens werden vor Inbetriebnahme des Basisstellgeräts mehrere Prozessregler-Konfigurationen mit mehreren vorkonfigurierten Regelungsalgorithmen in einem Speicher des Basisstellgeräts hinterlegt, so dass beispielsweise ein Monteur bei Inbetriebnahme des Basisstellgeräts eine bestimmte vorkonfigurierte Prozessregler-Konfiguration entsprechend der mit dem Basisstellgerät ausgestattete Heiz- oder Kühlanlage auswählen kann. Auf diese Weise ist es möglich, baugleiche Basisstellgeräte für unterschiedlichste Verwendungszwecke zu produzieren und trotzdem deren einfache Montage und Einrichtung vor Ort zu gewährleisten.

Bei einer bevorzugten Ausführung des erfindungsgemäßen Verfahrens wird von dem Basisstellgerät wenigstens ein Ausgabesignal insbesondere für eine Anzeigeeinheit, wie ein Display an dem Basisstellgerät oder eine externe Anzeigeeinheit, oder eine Leitwarte generiert, wobei das wenigstens eine Ausgabesignal beispielsweise eine Hubanzahl des Stellventils, eine Anzahl von Anfahrten oder Abfahrten der Heiz- oder Kühlanlage, den Energieverbrauch oder -konsum insbesondere wenigstens eines thermischen Verbrauchers der Heiz- oder Kühlanlage, vorzugsweise bezogen auf einen Referenzverbrauchs- oder -konsumwert, und/oder eine Fehlermeldung repräsentiert.

Eine bevorzugte Ausführung des erfindungsgemäßen Verfahrens ist dazu ausgelegt, gemäß der Funktionsweise eines erfindungsgemäßen Basisstellgeräts und/oder eines erfindungsgemäßen Heiz- oder Kühlanlagensystems zu verfahren. Das Verfahren kann insbesondere mittels eines Prozessreglers eines erfindungsgemäßen Basisstellgeräts oder eines Prozessreglers eines in einem erfindungsgemäßen Heiz- oder Kühlanlagensystem vorgesehene Basisstellgeräts durchgeführt werden.

Das erfindungsgemäße Verfahren ermöglicht einen Betrieb des erfindungsgemäßen Basisstellgeräts. Es sei klar, dass das erfindungsgemäße Verfahren derart ausgelegt sein kann, dass eine Einstellung einer Wärmetransferfluidströmung einer Heiz- oder Kühlanlage mit dem Basisstellgerät, wie oben beschrieben, realisiert werden kann.

Weitere Eigenschaften, Vorteile und Merkmale der Erfindung sind in der folgenden Beschreibung von Ausführungen der Erfindung anhand der beiliegenden Zeichnungen erläutert, in denen zeigen:
- Fig. 1: ein erfindungsgemäßes kompaktes Basisstellgerät;
- Fig. 2a: ein erfindungsgemäßes Heiz- oder Kühlanlagensystem mit einem erfindungsgemäßen Basisstellgerät;
- Fig. 2b: ein schematisch dargestelltes Verfahren für die Regelung eines erfindungsgemäßen Basisstellgeräts für eine Anlage gemäß Fig. 2a;
- Fig. 2c: ein anderes schematisch dargestelltes Regelungsverfahren für ein Basisstellgerät zum Regeln einer Anlage gemäß Fig. 2a;
- Fig. 3a: ein zweites erfindungsgemäßes Heiz- oder Kühlanlagensystem mit einem erfindungsgemäßen Basisstellgerät;
- Fig. 3b: ein Regelungsverfahren für ein erfindungsgemäßes Basisstellgerät eines Heiz- oder Kühlanlagensystems gemäß Fig. 3a;
- Fig. 4a: ein drittes Heiz- oder Kühlanlagensystem mit einem erfindungsgemäßen Basisstellgerät;
- Fig. 4b: ein Regelungsverfahren für ein erfindungsgemäßes Basisstellgerät wie in Fig. 4a dargestellt;
- Fig. 5a: ein viertes Heiz- oder Kühlanlagensystem mit einem erfindungsgemäßen Basisstellgerät;
- Fig. 5b: ein Regelungsverfahren für ein erfindungsgemäßes Basisstellgerät einer Anlage wie in Fig. 5a dargestellt;
- Fig. 6a: ein fünftes erfindungsgemäßes Heiz- oder Kühlanlagensystem mit einem Wärmetauscherkreislauf;
- Fig. 6b: ein Regelungsverfahren für ein erfindungsgemäßes Basisstellgerät, wie dem in Fig. 6a gezeigten;
- Fig. 7a: ein erfindungsgemäßes Heiz- oder Kühlanlagensystem; und
- Fig. 7b: ein Regelungsverfahren für ein erfindungsgemäßes Basisstellgerät gemäß Fig. 7a.

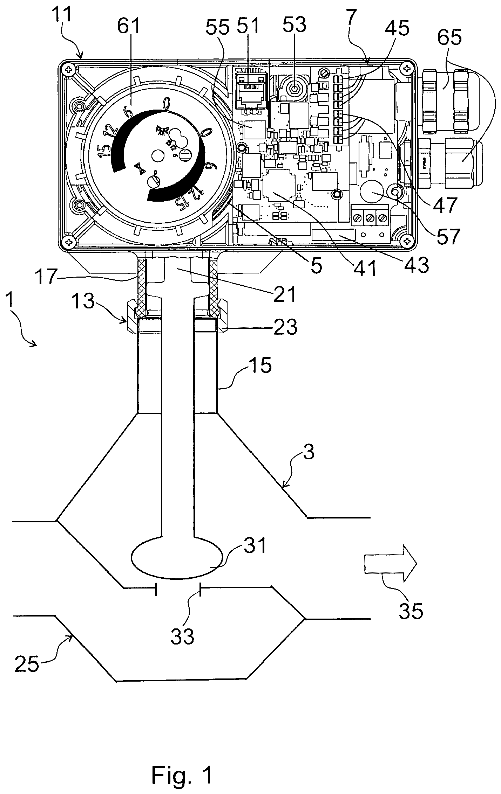

In den Figuren ist im Allgemeinen das erfindungsgemäße Basisstellgerät mit der Bezugsziffer 1 versehen. Die Hauptbestandteile des in Fig. 1 gezeigten Basisstellgeräts 1 sind ein Stellventil 3 und ein Stellantrieb 5, der an dem Stellventil 3 angebaut ist, sowie ein Prozessregler 7, der gemeinsam mit dem Stellantrieb 5 in einem Gehäuse 11 angeordnet ist. Das Gehäuse ist durch eine Schraubverbindung 13 mit dem Hals 15 des Ventilgehäuses 25 verbunden. Zu diesem Zweck ist ein Halsabschnitt 17 des Gehäuses 11, in dem die durch den Stellantrieb 5 betätigte Stellstange 21 gelagert ist, mittels einer Mutter 23 an dem Hals 15 des Ventilgehäuses 25 festgeschraubt. In dem Ventilgehäuse 25 können (nicht dargestellte) Dichtungen vorgesehen sein, um ein Austreten von Wärmetransferfluid entlang der Stellstange 21 zu vermeiden. Zwischen dem Ventilgehäuse 25 und dem Stellgerätgehäuse 11 kann ein (nicht dargestellter) Adapter, wie ein Joch oder eine Laterne, angeordnet sein.

An der Stellstange 21 ist ein Ventilglied 31 vorgesehen, das mit einem Ventilsitz 33 des Stellventils 3 öffnend und schließend zusammenwirkt. Auf diese Weise stellt das Basisstellgerät 1 mit dem Stellventil 3 eine Wärmetransferfluidströmung 35 einer Heiz- oder Kühlanlage ein.

Bei der in Fig. 1 dargestellten bevorzugten Ausführung eines Basisstellgeräts 1 ist als Stellantrieb 5 eine elektrisch angetriebene Nockenscheibe vorgesehen, die die Stellstange 21 betätigt. Der Stellantrieb 5 wird durch den Prozessregler 7 gesteuert. Insofern kann der Prozessregler als Stellungsregler realisiert sein. Der Prozessregler 7 kann einen Konfigurationsselektor zum Einstellen der Regelung durch den Prozessregler gemäß einer oder mehrerer vorbestimmter Prozessregler-Konfiguration(en) aufweisen.

Der Prozessregler 7 umfasst eine Platine mit einem Mikroprozessor oder Mikrocontroller 41, einer Speichereinheit 43, mehreren Signaleingängen 45 sowie mehreren Signalausgängen 47. Die Signaleingänge 45 können dazu ausgelegt sein, digitale oder analoge Signale (beispielsweise Strom- oder Spannungssignale) zu empfangen. Insbesondere kann an einem Signaleingang 45 ein Sensor, wie ein Temperatursensor, ein Drucksensor, ein Durchflussmengensensor oder dergleichen angeschlossen sein, mit dem jeweils wenigstens eine entsprechende Heiz- oder Kühlanlagen-Betriebsgröße erfasst wird. Dadurch stehen dem Prozessregler 7 Anlagen-Betriebsgrößen zur Verfügung. Der Mikroprozessor oder Mikrocontroller 41 kann mittels einer Regelroutine anhand wenigstens einer Heiz- oder Kühlanlagen-Betriebsgröße, beispielsweise einer von einem Sensor ermittelten Ist-Temperatur, ein Ventilstellsignal erzeugen. Die Platine des Prozessreglers 7 ist mit dem Elektromotor des Stellantriebs 5 verbunden und hat einen Stellsteuersignalausgang zum Übertragen des Ventilstellsignals an den Stellantrieb 5. Auf dem Mikrocontroller 41 kann eine Software zur Realisierung eines Konfigurationsselektors hinterlegt sein.

Wenigstens einer der Signalausgänge 47 ist als zusätzlicher Steuersignalausgang ausgelegt und beispielsweise über ein Kabel mit einem zusätzlichen Aktuator der Heiz- oder Kühlanlage signalübertragungsgemäß verbunden.

Der in Fig. 1 gezeigte Prozessregler hat vier Signaleingänge 45, von denen jeder mit einem eigenen Sensor verbindbar ist. Ein Signaleingang 45, der dem Prozessregler 7 einen Sensormesswert bereitstellt, also eine Ist-Betriebsgröße, kann auch als Ist-Signaleingang bezeichnet sein.

Wie in Fig. 1 zu erkennen ist, ist der Prozessregler 7 auch mit einem Soll-Signaleingang 51 ausgestattet. Dieser Soll-Signaleingang 51 kann beispielsweise als RJ-12-Buchse realisiert sein und/oder eine bidirektionale Kommunikation des Prozessregler 7 etwa mit einer Leitwarte ermöglichen. Der Prozessregler 7 hat außerdem eine Transceivereinheit 55 mit der z.B. Bluetooth-Signale empfangen und abgegeben werden können, sowie einen Drehgeber 53 zur manuellen Bedienung unmittelbar an dem Gehäuse 11. Ferner hat der Prozessregler 7 auch einen Timer 57 zum Bereitstellen von Zeitwerten für den Prozessregler 7 oder dessen Mikrocontroller bzw. Mikroprozessor 41.

An dem Prozessreglergehäuse 11 ist zur visuellen Ausgabe von Betriebsparametern beispielsweise eine Skala 61 zur Hubanzeige und ein (nicht dargestelltes) LCD-Display oder dergleichen vorgesehen. Neben dem Drehgeber 153 sind an dem Gehäuse Druckknöpfe 63 oder Taster angeordnet, die manuelle Benutzereingaben erlauben. Ferner weist das Gehäuse 11 insbesondere abdichtbare Öffnungen auf, z.B. Kabelverschraubungen 65, durch die Kabel von dem Prozessregler 7 zu Sensoren, zur Stromversorgung und/oder zu einer Leitwarte verlegbar sind.

In Fig. 1 bis 7 sind zur besseren Lesbarkeit für ähnliche oder identische Bauelemente bzw. Regelungselemente die gleichen Bezugszeichen verwendet.

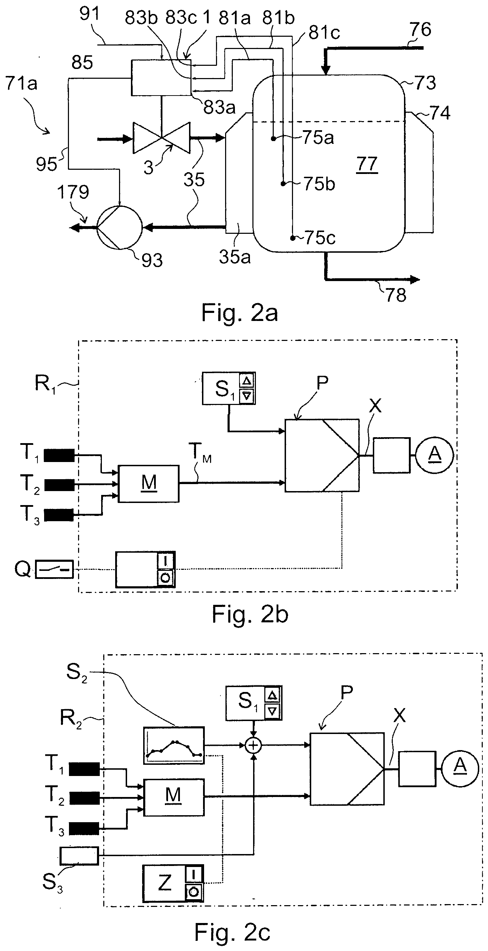

Fig. 2a zeigt schematisch eine Heizanlage 71a, beispielsweise zum Pasteurisieren von Milch in einem Tank 73. In dem Tank 73 sind drei Temperatursensoren 75a, 75b und 75c an vertikal zueinander versetzten Punkten innerhalb eines mit einem zu erwärmenden Fluid 77 gefüllten Bereiches angeordnet. Die Temperatursensoren 75a, 75b und 75c sind jeweils durch eine eigene Leitung 81a, 81b und 81c signalübertragungsgemäß mit dem Basisstellgerät 1 verbunden. An dem Basisstellgerät 1 sind Eingänge 83a, 83b und 83c für jede der Signalleitungen 81a, 81b und 81c vorgesehen. Außerdem hat das Basisstellgerät einen weiteren Signalein- und/oder -ausgang 85 zur Kommunikation über eine Ansteuerleitung 91 mit einer Leitwarte (nicht dargestellt). Der Leitsignaleingang 85 kann beispielsweise 0 bis 10 V oder 4 bis 20 mA Leitsignale von der Leitwarte empfangen. Über die Ansteuerleitung 91 kann dem Basisstellgerät 1 auch die zur Einstellung der Wärmetransferfluidströmung 35 benötigte Energie übermittelt werden. Das Basisstellgerät 1 kann aber auch eine andere Energieversorgungsleitung haben oder mit Batterien versehen sein.

In Fig. 2a ist schematisch die Stellstange 21 zur Stellkraftübertragung von dem (nicht sichtbaren) Stellantrieb des Basisstellgeräts 1 zum Stellventil 3 dargestellt.

Wie in Fig. 2a ersichtlich, ist bei der Heizanlage 71a neben dem Stellventil 3 ein weiterer Aktuator in Form einer Pumpe 93 vorgesehen, die durch das Basisstellgerät 1 mittels einer Pumpensteuerleitung 95 signalübertragungsgemäß gekoppelt ist. Die Pumpensteuerleitung 95 kann in funktionsunion zur Energieversorgung der Pumpe 93 vorgesehen sein. Das Basisstellgerät 1 hat einen Steuersignalausgang 97, an dem die Steuersignalleitung 95 angeschlossen ist. Es sei klar, dass der Steuersignalausgang 97, ebenso wie die Signaleingänge 81a, 81b, 81c und 85, dem in Fig. 2a nicht sichtbaren Prozessregler des Basisstellgeräts 1 zugeordnet sind.

Bei der in Fig. 2a dargestellten Heizanlage ist das Wärmetransferfluid ein durch eine (nicht dargestellte) Wärmequelle temperiertes Heizfluid 35a, welches als Wärmetransferfluidströmung 35 zunächst das Stellventil 3 des Basisstellgeräts 1 passiert und anschließend in einen Wärmetauschkessel 74 geleitet wird, der den Tank 73, in dem das Verbraucherfluid 77 sich befindet, außenumfänglich größtenteils umgibt. Von dem Kessel 74 wird das Heizfluid 35a mittels der Pumpe 93 abgezogen und kann wieder zurück zu der Wärmequelle gepumpt werden. Bei einer derartigen Heizanlage strömt das Heizfluid also in einem Heizkreislauf 179 zwischen der Wärmequelle und dem Kessel 74 durch eine Wärmezuführleitung 101 und eine Wärmeabführleitung 103. Von dem Heizfluid 35a wird über die Wandung zwischen dem Tank 73 und dem Kessel 74 Wärme an das Verbraucherfluid 77 übertragen, ohne dass die beiden Fluide in einen direkten Kontakt miteinander kommen. Dadurch wird der Wärmetransferfluidströmung 35 Wärme entzogen. Der Tank 73 kann also als thermischer Verbraucher bezeichnet sein.

In Fig. 2b und Fig. 2c sind zwei vorkonfigurierte Regelungsroutinen für unterschiedliche Betriebszustände des Basisstellgeräts 1 dargestellt. Die unterschiedlichen Regelungsroutinen können beispielsweise in dem Speicher 43 oder unmittelbar auf den Mikrocontroller 41 des Prozessreglers 7 hinterlegt sein und durch einen Mikroprozessor bzw. Mikrocontroller 41 durchgeführt werden. Die erste Regelungsroutine R₁ gemäß Fig. 2b empfängt als Eingabewerte die Temperaturwerte T₁, T₂ und T₃, die den von den Sensoren 75a, 75b und 75c der ermittelten Ist-Temperaturen des Fluids 77 entsprechen.

In der Regelungsroutine R₁ wird zunächst durch eine Mittelwertfunktion M ein Temperaturmittelwert T_{M} der Temperaturen T₁, T₂ und T₃ berechnet. Es sei klar, dass unterschiedliche Verfahren zur Bildung des Mittelwerts in Betracht kommen, beispielsweise kann das arithmetische Mittel, ein Median oder eine Mittelwertbildung anhand einer frei wählbaren Gewichtung der Temperaturen T₁, T₂ und T₃ erfolgen. Der ersten Regelungsroutine R₁ ist ein Temperatur-Sollwert S₁ vorgegeben, beispielsweise über die Tasten 63 des Basisstellgeräts 1.

Ein Regelmodul P (beispielsweise ein PID- Regelmodul) erzeugt basierend auf dem Temperatur-Sollwert S₁ und dem Temperaturmittelwert T_{M} ein Steuersignal X, das von der Regelungsroutine R₁ als Ausgabesignal über einen Signalausgang A ausgegeben wird, um damit den Stellantrieb 5 anzusteuern. Auf diese Weise kann das Basisstellgerät mittels der Regelungsroutine R₁ basierend auf drei Ist-Temperaturen und einer beispielsweise manuell vorgegebenen Soll-Temperatur S₁ das Stellventil 3 öffnen oder schließen, um die Durchflussmenge des Heizfluids 35a zu regulieren und dadurch auch die durch den Tank 73 bereitgestellte Wärme. Um die Temperatur des Fluids 77 in dem Tank 73 zu erhöhen, öffnet das Basisstellgerät 1 das Ventil 3, so dass die Durchflussmenge an Heizfluid 35a erhöht wird. Weitere Schalter 63 können manuell betätigt werden, um die Regelungsroutine R₁ des Prozessreglers 7 über ein An-/Aus-Signal Q zu kontrollieren.

Bei einer zweiten vorkonfigurierten Regelungsroutine R₂ gemäß Fig. 2c stehen dem Prozessregler neben den Temperatur-Ist-Werten T₁, T₂ und T₃ von den Temperatursensoren 75a, 75b und 75c drei Sollwerte, nämlich ein manuell vorgegebener Sollwert S₁, ein von einer Leitwarte vorgegebener Sollwert S₃ und eine Reihe von in der Speichereinheit 43 des Prozessreglers 7 hinterlegten Sollwerten S₂ zur Verfügung. Ein Kontrollsignal a kann bestimmen, welcher der Sollwerte S₁, S₂ oder S₃ zur Regelung zugrunde gelegt werden soll. Beispielsweise kann die Regelung basierend auf der Reihe vorkonfigurierter Soll-Temperaturen erfolgen. Üblicherweise ist eine derartige Reihe tabellenartig hinterlegt, beispielsweise kann bestimmten Zeitpunkten ein individueller Soll-Temperaturwert zugeordnet sein, um eine zeitabhängige Soll-Temperaturkurve festzulegen. Mittels eines Timers kann die Regelungsroutine R₂ dann einen Soll-Wert S₂ in Abhängigkeit von dem aktuellen Zeitpunkt in das Regelmodul P einspeisen, so dass zeitabhängige Steuersignale X an dem Signalausgang A bereitgestellt werden. So kann das Basisstellgerät in einer Anlage zum Pasteurisieren von Milch verwendet werden, in der stets eine im Wesentlichen gleiche Menge Milch über eine Zuführleitung 76 in einen Tank 73 gefüllt wird. Die Milch 77 wird gemäß einer vorkonfigurierten Temperaturkurve temperiert. Am Ende des Pasteurisiervorgangs kann die Milch 77 durch eine Auslassleitung 78 aus dem Tank 73 entfernt werden. Auf ähnliche Weise kann auch ein Ölbad zum Härten von Metall in einer vorkonfigurierten Temperaturkurve geheizt und/oder gekühlt werden.

Unterschiedliche Regelungsroutinen R₂ können beispielsweise durch den Konfigurationsselektor, der beispielsweise softwareartig auf dem Microcontroller 41 des Prozessreglers 7 realisiert sein kann, abhängig von einer Eigenschaft einer zu bearbeitenden Charge, wie deren Größe, konfigurierbar sein. Beispielsweise kann in einer Heizanlage 41a, die zum Pasteurisieren von Milch ausgelegt ist, unterschiedliche Regelungsroutinen R₂ für unterschiedliche Milchmengen auf dem Speicher 43 hinterlegt sein. Das Basisstellgerät 1 kann die Größe der Charge, wie die Menge zu pasteurisierender Milch, von einer Leitwarte oder durch manuelle Eingaben oder alternativ durch einen Sensor zum Erfassen der Menge ermitteln, beispielsweise mit einem Durchstrommengensensor (nicht dargestellt) in der Zuführleitung 76. In der Anlage 71a können für unterschiedliche Mengen Milch unterschiedliche Regelungsroutinen R₂ eingesetzt werden. Auf ähnliche Weise kann ein Basisstellgerät 1 auch unterschiedliche Regelungsroutinen für andere Prozesse, beispielsweise beim thermischen Behandeln von anderen Flüssigkeiten als Milch oder zum thermischen Behandeln etwa von Metallen mittels vorkonfigurierter Regelungsroutinen durchführen.

Eine Anlage 71a zum Pasteurisieren von Milch oder zum thermischen Behandeln von Metallen, Kunststoffen, Keramiken oder dergleichen, kann in einem thermischen Versorgerkreislauf auch für unterschiedliche thermische Behandlungsprozesse wahlweise mit einem Kühlfluid oder einem Heizfluid als Versorgungsfluid gefüllt sein. Die Regelung des Basisstellgeräts 1 kann bei einer solchen Anlage dazu ausgestaltet sein, unterschiedliche Regelungsroutinen R₁, R₂, etc., für die unterschiedlichen thermischen Behandlungsprozesse aufweisen. Die Umschaltung zwischen den Regelungsroutinen der unterschiedlichen thermischen Behandlungsprozesse kann durch einen Konfigurationsselektor automatisch erfolgen, beispielsweise indem der Selektor abhängig von einem Timer-Wert umschaltet, oder indem mittels eines Temperatursensors (nicht dargestellt), der im Versorgungskreislauf stromaufwärts des thermischen Verbrauchers der Selektor erkennt, ob das Basisstellgerät zur Kühlung oder zur Heizung verwendet wird. Ein Steuersignal kann (nicht dargestellt) zum Steuern eines Stellventils und eines Zusatzaktuators in einem Stellungsreglermodul und parallel dazu in ein Aktuatorsteuermodul eingespeist werden. Das Aktuatorsteuermodul kann über ein Relais zum Ein- und/oder Ausschalten des Aktuators verfügen.

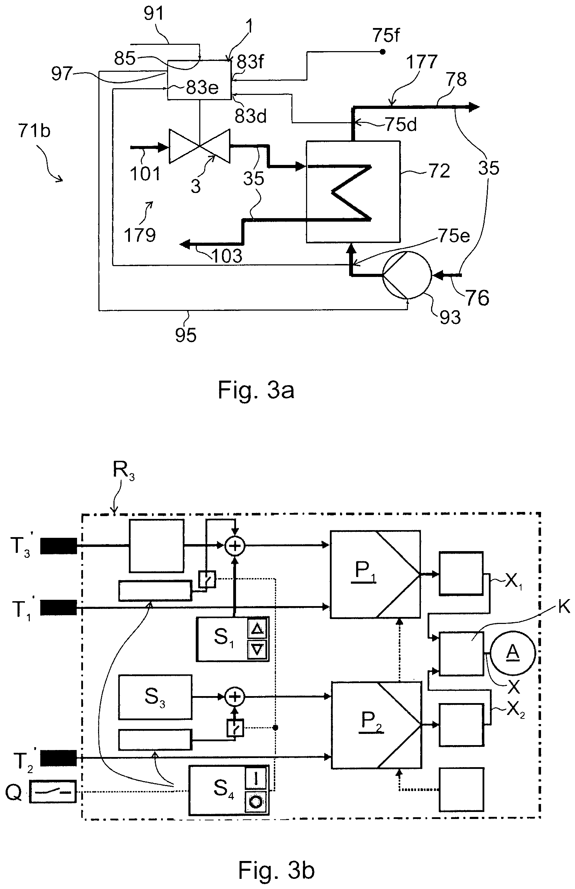

Fig. 3a zeigt eine weitere erfindungsgemäße Anlage 71b, nämlich eine Klimaanlage zum Temperieren eines Wohnraums. Im Unterschied zu der in Fig. 2a dargestellten Anlage 71a ist in Fig. 3a ein Verbraucherkreislauf 177 dargestellt, der einen Wärmetauscher 72 umfasst. Der Verbraucherkreislauf 177 enthält Wasser als Wärmeabgabe- und -aufnahmefluid. Das Wasser fließt durch eine Wasser-Auslassleitung 78 zu einem Heiz- und/oder Kühlkörper (nicht dargestellt) und anschließend zurück durch die Zuführleitung 76 zu dem Wärmetauscher 72. In dem Verbraucherkreislauf-Rücklauf 76 ist eine Pumpe 93 zum Fördern des Wassers vorgesehen, die durch das Basisstellgerät 1 steuerbar ist, wie in Fig. 2a dargestellt.

Das Basisstellgerät 1 hat ein Ventil 3, mit dem die Wärmetransferfluidströmung 35, durch die der Wärmetauscher 72 versorgt wird, eingestellt wird. Das Stellventil 3 ist in der Wärmezuführleitung 101 des Versorgungskreislaufs 179 des Anlagensystems 71b angeordnet. Das Basisstellgerät stellt also die Wärmetransferfluidströmungen von zwei fluidisch voneinander getrennten Kreisläufen ein. Der Versorgungskreislauf 179, der von einem Heiz- und Kühlfluid durchströmt ist, wird durch das Stellventil 3 gesteuert, ebenso der Verbraucherkreislauf 177, in dem das Wärmeaufnahme- und/oder -abgabefluid mittels der Pumpe fließt.

Zur Regelung stehen dem (nicht dargestellten) Prozessregler des Basisstellgeräts 1 des Klimaanlagensystems 71b die Messdaten von drei Temperatursensoren 75d, 75e und 75f zur Verfügung. Der Temperatursensor 75e misst die Temperatur des Wassers des Verbraucherkreislaufs 177 kurz vor Eintritt in den Wärmetauscher 72. Der Temperatursensor 75d misst die Temperatur des Wassers kurz nachdem es aus dem Wärmetauscher 72 austritt. Der dritte Temperatursensor 75f ermittelt die Temperatur im Wohnraum. An dem Basisstellgerät sind wiederum Ist-Temperatursignaleingänge 83d, 83e und 83f für jeden der Temperatursensoren 75d, 75e und 75f vorgesehen.

Der Klimaanlage 71b kann ein erhitztes Fluid von einer Wärmequelle über die Wärmezuführleitung 101 bereitgestellt werden. Alternativ kann (nicht dargestellt) über die Wärmeabführleitung 103 Wärme aus dem Wohnraum zu einer Wärmesenke hin abgeführt werden. Insofern kann die Klimaanlage 71b gemäß Fig. 3a als Verbraucherkreislauf beispielsweise einen Wärme verbrauchenden Heizkörper oder eine Wärme abführende Klimadecke aufweisen. Es ist denkbar, dass die Klimaanlage 71b (nicht dargestellte) Zusatz-Stellventile in dem Versorgerkreislauf 179 umfasst, durch die wahlweise eine Wärmequelle oder eine Wärmesenke zu- bzw. abgeschaltet werden kann, wobei das Basisstellgerät diese Zusatz-Stellventile ebenfalls einstellt.

Die Steuerung von zwei Aktuatoren in voneinander getrennten Kreisläufen, also dem Stellventil in dem Versorgerkreislauf 179 und der Pumpe 93 in dem Verbraucherkreislauf 177 hat sich als insofern vorteilhaft erwiesen, als sie dem Basisstellgerät erlaubt, die Durchflussmengen sowohl des Wärmetransferfluids 35 in dem Versorgungskreislauf 179 als auch in dem Verbraucherkreislauf 177 einzustellen. Auf diese Weise kann das Basisstellgerät 1 beispielsweise wenn der Versorgerkreislauf ein sehr heißes Heizfluid bereitstellt, so dass das Stellventil zum Erreichen einer verhältnismäßig niedrigen Wohnraumtemperatur weitestgehend geschlossen werden muss, durch Einstellen der Durchflussmenge in dem Verbraucherkreislauf 177 mittels der Pumpe 93 die gewünschte Temperatur in dem Wohnraum einstellen, in dem das Stellventil 3 auf eine kleinste stabil regelbare Öffnungsweite gefahren wird und anschließend dort verbleibt, während durch die Pumpengeschwindigkeit gesteuert wird, wieviel Wärme zum Heizen des Wohnraums in den Verbraucherkreislauf 177 aufgenommen wird.

Die Regelung des in Fig. 3a dargestellten Klimaanlagensystems 71b kann beispielsweise mittels der Regelungsroutine R₃ gemäß Fig. 3b erfolgen. Bei der Regelungsroutine R₃ ist dem Basisstellgerät eine Soll-Temperatur S₁ und eine zulässige Temperaturabweichung S₄ vorgegeben. Die Soll-Temperatur S₁ wird üblicherweise manuell an dem Basisstellgerät eingestellt. Eine zulässige Soll-Temperaturabweichung S₄ ist üblicherweise bei Installation des Basisstellgeräts eingestellt worden. Eine alternative Soll-Temperatur S₃ kann durch eine Leitwarte vorgegeben sein. Die Regelungsroutine R₃ empfängt daneben als Eingabewerte Temperaturen T₁' entsprechend der die Temperatur-Ist-Werte an dem Temperatursensor 75d, die Temperatur T₂' von dem Temperatursensor 75e und die Temperatur T₃' von dem Temperatursensor 75 f.

Die Regelmodule P₁ und P₂ erzeugen unabhängig voneinander jeweils ein Stellsteuersignal X₁ bzw. X₂. Dazu verarbeitet das erste Regelmodul P₁ einen Verbraucherfluidvorlauf-Temperatur-Sollwert S₁, die in der Umgebung des Verbrauchers gemessener Temperatur T₃' und die Vorlauftemperatur T₁', um das Steuersignal X₁ zu erzeugen. Das zweite Regelmodul P₂ erzeugt ein zweites Steuersignal X₂ basierend auf dem Rücklauftemperatur-Sollwert und der Temperatur T₃', die in dem Versorgerkreislauf stromabwärts des Wärmetauschers 72 erfasst wird. Ein Komparatormodul K der Regelungsroutine R₃ des Prozessreglers vergleicht die beiden Stellsteuersignale X₁ und X₂ miteinander und gibt das kleinere der beiden als Stellsteuersignal X für den Signalausgang A weiter.

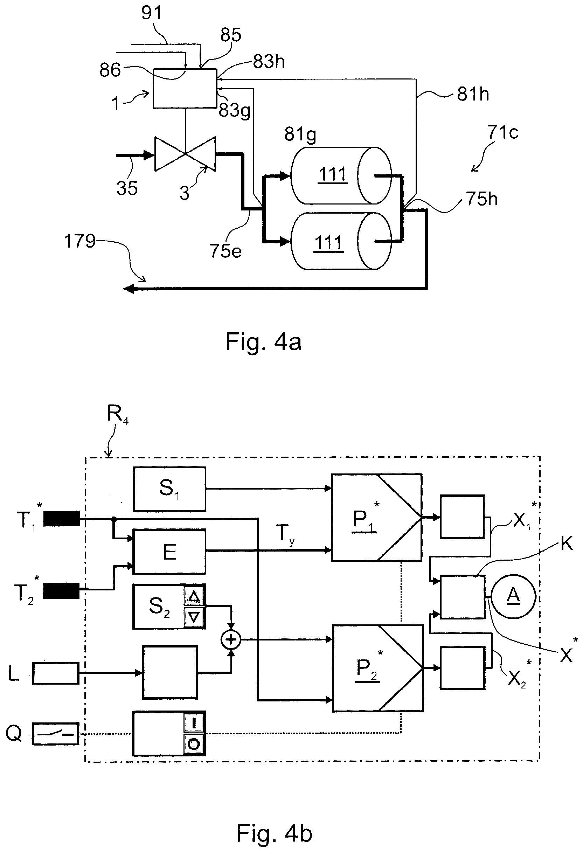

Bei dem in Fig. 4a dargestellten Kühlanlagensystem ist der weitere Aktuator nicht dargestellt. Das Basisstellgerät 1 der Anlage 71c erfasst mit dem Temperatursensor 75g die Temperatur vor den als Kühlwalzen 111 realisierten Verbrauchern. Der Temperatursensor 75h erfasst den Temperatur im Nachlauf stromabwärts der beiden Kühlwalzen 111. Die Messsignale der Temperatursensoren 75g und 75h werden über jeweils eine Leitung 81g bzw. 81 h an die Signaleingänge 83g und 83h geleitet.

Ähnlich wie in Fig. 2a und 3a hat das Basisstellgerät 1 in Fig. 4a auch einen Signaleingang 85 für ein Leitsteuersignal, das über eine Ansteuerleitung 91 von einer Leitwarte bereitgestellt wird. Außerdem hat das Basisstellgerät 1 der Kühlanlage 71c einen Signaleingang 86 für einen manuell bedienbaren Schalter, wie einen Not-Aus-Schalter der Anlage. In der Kühlanlage 71c wird durch einen Versorgerkreislauf ein Kühlfluid geströmt, auf das das Stellventil 3 des Basisstellgeräts 1 Zugriff hat, um es einzustellen. Als weiterer Aktuator der Anlage kann beispielsweise der Motor der Kühlwalzen 111 oder eine nicht dargestellte Pumpe in dem Versorgerkreislauf 179 dienen.

Die Kühlanlage gemäß Fig. 4a kann beispielsweise gemäß der Regelungsroutine R₄, die in Fig. 4b dargestellt ist, durch das Basisstellgerät geregelt werden. Als Eingabegrößen empfängt die Regelungsroutine R₄ die Temperatur T₁* des Kühlfluids, nachdem es aus den Kühlwalzen 111 ausgetreten ist, also den Messwert des Sensors 75h als zweiten Temperatur-Ist-Wert T₂*. Daneben empfängt die Regelungsroutine R₄ die Ist-Temperatur im Vorlauf der Verbraucher 111 von dem Sensor 75g. Außerdem ist der Regelungsroutine R₄ ein Leitsignal L von einer Leitwarte bereitgestellt. Die Regelungsroutine R₄ wird durch den Prozessregler des Basisstellgeräts ausgeführt, wenn ein Start-/Stopp-Signal Q zum Betrieb der Kühlwalzenanlage aktiviert ist.

Wenn die Regelungsroutine R₄ aktiviert ist, werden die beiden Temperaturen T₁* und T₂* mittels einem Funktionsmodul oder einer Funktion F anlagenspezifisch verarbeitet und ein verarbeiteter Temperaturwert T_{Y}, beispielsweise ein Mittelwert, in einem ersten Regelmodul P₁* eingegeben, der auch einen Temperatur-Sollwert S₁ empfängt und basierend auf dem Sollwert S₁ und dem Temperaturwert T_{Y} ein erstes Stellsteuersignal X₁* erzeugt. Ein zweites Regelmodul P₂* erhält nur eine der beiden Temperaturen, nämlich die Temperatur aus dem Nachlauf der Kühlwalzen T₁*, sowie einen Sollwert S₂, der von einer Leitwarte als Leitsignal L vorgegeben sein kann. Das zweite Regelmodul P₂* erzeugt das zweite Stellsteuersignal X₂*. Ähnlich der in Fig. 3b dargestellten Regelungsroutine ist ein Komparatormodul K vorgesehen, der das Stellsteuersignal X* entsprechend dem kleineren der Stellsteuersignale X₁* und X₂* als Ausgabesignal X zur Einstellung des Stellantriebs erzeugt.

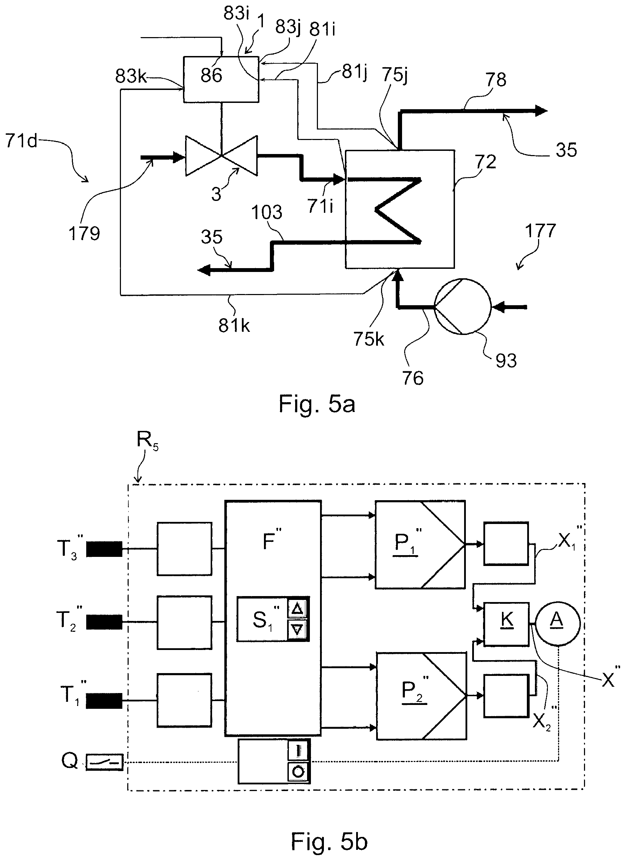

In Fig. 5a ist eine Kühlanlage einer Fernkältestation dargestellt. Das Wärmetransferfluid in dem Versorgerkreis 179 ist also ein Kühlfluid, das zunächst das Stellventil 3 des Basisstellgeräts 1 und anschließend einen Wärmetauscher 72 durchfließt, bevor es (erwärmt) durch die Wärmeabführleitung 103 zu einer Wärmesenke transportiert wird. Von der Wärmesenke gekühlt kann es erneut durch das Ventil 3 zu dem Wärmetauscher 72 gefördert werden. Bei der Kühlanlage 71d wird eine Temperatur in dem Versorgerkreislauf 179 stromaufwärts vor dem Wärmetauscher 72 mit einem Temperatursensor 71i erfasst. Weitere Temperatursensoren 75k und 75j erfassen die jeweilige Temperatur des Verbraucherfluids in dem Verbraucherkreislauf 177 stromaufwärts vor bzw. stromabwärts nach dem Wärmetauscher 72. Eine Verbindungsleitung zwischen dem Basisstellgerät 1 und der Pumpe 93 ist nicht dargestellt, weil das Basisstellgerät und die Pumpe 93 über Funk signalübertragungsgemäß verbunden sind.

Die Regelungsroutine R₅ gemäß Fig. 5b kann zur Einstellung der Wärmetransferfluidströmung 30 in der Kühlanlage gemäß Fig. 5a verwendet werden. Dazu werden die Temperatur-messwerte T₁", T₂" und T₃" von den drei Temperatursensoren 71i, 71j und 71k der Anlage von der Routine A₅ eingelesen und festgestellt, ob das An-/Aus-Signal Q zum Betreiben der Anlage angeschaltet ist. Ein Funktionsmodul F" erzeugt basierend auf den Temperaturmesswerten T₁", T₂" und T₃" sowie dem Temperatur-Sollwert S₁" Ist- und Soll-Eingangssignale für die beiden Regelmodule P₁" und P₂". Es sei klar, dass der Funktionsmodul F" unterschiedliche Betriebsgrößen für die beiden Regelmodule P₁" und P₂" vorgeben kann und/oder dass die Regelmodule P₁" und P₂" basierend auf der gleichen Anlagen-Betriebsgröße mittels unterschiedlicher Regelungsfunktionen und unterschiedliche Steuersignale generieren können. Wie bei den beiden vorigen Ausführungen ist auch bei der Regelungsroutine R₅ ein Komparatormodul K vorgesehen, das anhand der Steuersignale X₁" und X₂" ein Stellsteuersignal X" generieren kann, vorzugsweise gemäß dem kleineren der beiden Steuersignale X₁", ggf. aber auch dem größeren.

Die in Fig. 5b gezeigte Kühlanlage kann zur Regelung berücksichtigen, welcher Monat oder welche Jahreszeit vorherrscht. Mittels einer Uhr, eines Kalenders oder einem anderen Timer 57 können Rückschlüsse auf die vorherrschenden jahreszeitbedingten Umgebungsbedingungen durch eine vorkonfigurierte Regelungsroutine bzw. Regelungsalgorithmus gezogen werden. Alternativ kann zu diesem Zweck ein (nicht dargestellter) Temperatursensor vorgesehen sein, der die Umgebungstemperatur, insbesondere eine Außentemperatur der Anlage, erfasst und dem Basisstellgerät 1 mitteilt. Erkennt der Konfigurationsselektor etwa anhand von Au-βentemperatur, die nahe dem Gefrierpunkt oder darunter liegt, so dass keine Kühlung notwendig ist, kann die Regelung beispielsweise darauf beschränkt sein, dass ein geringer Volumenstrom in den Kreisläufen 177, 179 erfolgt, so dass ein Vereisen der Anlage 71d vermieden wird. Zu diesem Zweck kann eine (nicht dargestellte) vorbestimmte Frostschutz-Regelungsroutine auf dem Microcontroller 41 des Prozessreglers 7 hinterlegt sein.

Alternativ oder zusätzlich zu einer jahreszeitabhängigen Regelung mit jahreszeitabhängig vorkonfigurierten Regelungsalgorithmen, wie oben beschrieben, kann ein Basisstellgerät 1 für eine Heiz- oder die dargestellte Kühlanlage 71d gemäß Fig. 5a tageszeitabhängig vorkonfigurierte Regelungsalgorithmen aufweisen. So kann beispielsweise außerhalb gewöhnlicher Arbeitszeiten, beispielsweise zwischen 9.00 Uhr und 17.00 Uhr, eine Regelungsroutine einer Kühlanlage höhere Ist-Raumtemperaturen gestatten, als während der üblichen Bürozeit. Beispielsweise können unterschiedliche vorkonfigurierte Regelungsalgorithmen für eine Tag-Konfiguration, mit einem niedrigen Soll-Temperaturwert oder benutzerindividuell einstellbaren Soll-Temperaturwerten wählbar sein, und eine Nacht-Konfiguration mit höheren SollWerten. Die Regelung kann auch tageszeitabhängig deaktiviert werden.

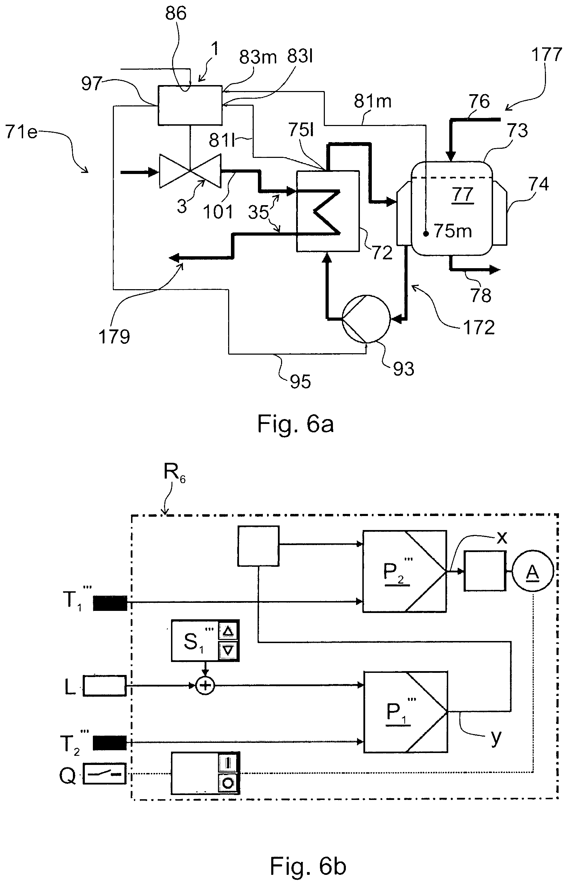

Die in Fig. 6a dargestellte Heizanlage ist ähnlich der Heizanlage zum Pasteurisieren gemäß Fig. 2a aufgebaut. Zwischen dem durch eine Wärmequelle thermisch versorgten Versorgungskreislauf 179 und dem Verbraucherkreislauf 177 ist allerdings im Unterschied zu der in Fig. 2a dargestellten Anlage zusätzlich ein Wärmetauscherkreislauf vorgesehen.

Der Wärmetauscherkreislauf 172 verbindet den Verbraucherkreislauf 177 wärmeübertragungsgemäß mit dem Versorgungskreislauf 179. Versorgungskreislauf 179, Wärmetauscherkreislauf 172 und Verbraucherkreislauf 177 sind fluidisch voneinander getrennt, die Flüssigkeiten der drei Kreisläufe kommen also nicht miteinander in Berührung. Sie sind separiert durch die Rohrwandungen in dem Wärmetauscher 72 und die Wandung zwischen dem Tank 73 und dem Kessel 74. In dem Wärmetauscherkreislauf 177 ist ein Aktuator in Form einer Pumpe 93 vorgesehen. Als Aktuator kann aber auch ein anderes Zusatzstellgerät verwendet werden, das durch das Basisstellgerät 1 gesteuert wird. In diesem Fall kann in dem Wärmetauscherkreislauf eine Pumpe angeordnet sein, die nicht durch das Basisstellgerät geregelt ist, sondern eine konstante Pumpleistung bereitstellt.

Bei der Heizanlage 71e ist ein Temperatursensor 75m in dem Tank 73 des Verbraucherkreislaufs 177 vorgesehen und ein zweiter Temperatursensor 751 in dem Wärmetauscherkreislauf 172 in Strömungsrichtung zwischen dem Wärmetauscher 72 und dem Kessel 74. Ein derartiger Wärmetauscherkreislauf 172 kann beispielsweise zwischen einem Fernwärmenetz-Versorgerkreislauf 179 und einem Warmwassertank 73 einer Haus- oder Etagenheizung vorgesehen sein.

In Fig. 6b ist eine Regelungsroutine R₆ dargestellt, die von dem Prozessregler des Basisstellgeräts 1 der Anlage 71e gemäß Fig. 6a verwendet werden kann. Der Regelungsroutine R₆ wird ein Leitwert L von einer Leitwarte oder wahlweise ein manueller Sollwert S₁'" sowie die beiden Temperatur-Messwerte T₁'" und T₂'" als Eingabewerte vorgegeben. Die Temperatur T₁"' entspricht der durch den Temperatursensor 75m erfassten Temperatur in dem Tank 73. Die Temperatur T₂'" repräsentiert die durch den Temperatursensor 751 stromabwärts des Wärmetauschers in dem Wärmetauscherkreislauf 172 gemessene.

Die Regelungsroutine R₆ kann insofern als Kaskadenregelungsroutine bezeichnet werden, als ein erstes Regelmodul P₁'" basierend auf dem Temperatursignal T₂'" und dem Leitsignal L oder dem Sollsignal S₁'" ein Steuersignal Y'" erzeugt, das gemeinsam mit der zweiten Temperatur T₁"' in das zweiten Reglermodul R₂'" eingegeben wird. Das Reglermodul R₂ erzeugt basierend auf den beiden Eingabewerten den Steuerwert X"', der als Ausgabesignal A zur Steuerung eines Aktuators, insbesondere als Stellsteuersignal für das Stellventil ausgegeben wird.

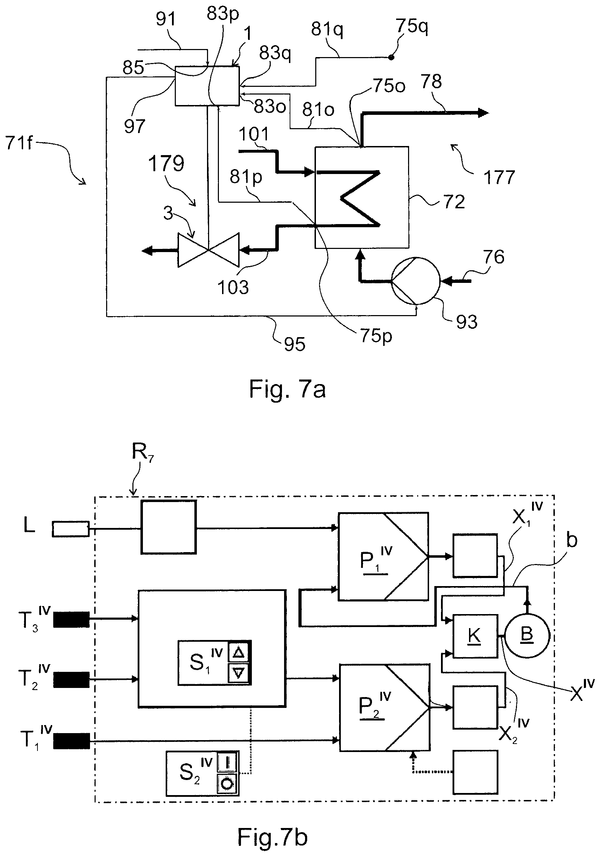

Die Heiz- oder Kühlanlage 71f der gemäß Fig. 7a ähnelt der Anlage 71b gemäß Fig. 3a. Ein Unterschied zwischen den beiden Anlagen liegt darin, dass das Ventil 3 der Anlage 71f stromabwärts des Wärmetauschers 72 in dem Versorgungskreislauf 179 angeordnet ist. Daneben unterscheiden sich die Positionen der Temperatursensoren leicht. Temperatursensor 75q ist wie Temperatursensor 75f in der Umgebung des Verbraucherkreislaufs 177 angeordnet. Der Temperatursensor 75o ist, wie auch der Temperatursensor 75d, stromabwärts des Wärmetauschers 72 in dem Verbraucherkreislauf 177 vorgesehen. Allerdings ist der Temperatursensor 75p nicht wie der Sensor 75e in dem Verbraucherkreislauf, sondern in dem Versorgungskreislauf 179 stromabwärts des Wäremetauschers 72 angeordnet.

In Fig. 7b ist eine Regelungsroutine R₇ dargestellt, die insofern als Notfallregelungsroutine bezeichnet werden kann, als das Komparatormodul K der Regelungsroutine R₇ erfasst, ob ein Leitsignal L in einem zulässigen Bereich insbesondere zwischen 2 und 10 V oder 4 und 20 mA an dem Leitsignaleingang 85 des Basisstellgeräts 1 vorliegt und basierend auf dem Vorliegen oder Nichtvorliegen des zulässigen Leitsignals entweder ein Steuersignal X^{IV} als Steuersignal X^{IV} erzeugt, das basierend auf dem des ersten Regelmoduls P₁^{IV} erzeugt wurde, der auch das Leitsignal L verarbeitet, oder, ob das Komparatormodul K ein Steuersignal X^{IV} basierend auf dem Steuersignal X₂^{IV} des zweiten Regelmoduls P₂^{IV} abgibt. Das zweite Regelmodul empfängt nur Soll-Betriebsgrößen S₁^{IV} und S₂^{IV}, die in dem Basisstellgerät 1 gespeichert oder manuell vorgebbar sind, sowie die durch die Sensoren 75o, 75p und 75q ermittelte Temperaturen T₁^{IV}, T₂^{IV} und T₃^{IV}. Ferner unterscheidet sich die Regelungsroutine, die in Fig. 7b dargestellt ist, von den zuvor dargestellten Regelungsroutinen darin, dass die Schnittstelle B kein reiner Ausgang zum Abgeben eines Steuersignals X^{IV} ist, sondern auch als Eingang für einen Aktuator-Messwert b, dient. Dieser Aktuator-Messwert stellt ebenfalls eine Betriebsgröße dar, die von dem ersten Regelmodul P₁^{IV} verwendet wird. Die Aktuatormessgröße b kann beispielsweise die Drehzahl eines Pumpenmotors oder die Stellposition eines Zusatzstellgeräts sein.

Bei den oben beschriebenen bevorzugten Ausführungen sind die Ist-Betriebsgrößen in der Regel Temperaturen. Es sei klar, dass auch andere Ist-Betriebsgrößen zur Regelung verwendet werden können, insbesondere Durchflussmengen, Druckmesswerte oder dergleichen.

Die unterschiedlichen Regelungsroutinen R₁ bis R₇ sind vorkonfiguriert in einem Speicher 43 des erfindungsgemäßen Basisstellgeräts 1 hinterlegt und können bei Einrichtung des Basisstellgeräts 1 durch den Installateur gewählt werden. In dem Prozessregler 7 können auf dessen Platine ein, zwei oder mehr Hardware-PID-Regler vorgesehen sein. Als Temperatursensor kann ein Pₜ 1000 Messfühler vorgesehen sein.

Das Basisstellgerät 1 ist dazu ausgelegt, über einen gewissen Zeitraum, beispielsweise mehrere Stunden, mehrere Tage, mehrere Monate oder sogar mehrere Jahre, den thermischen Verbrauch eines thermischen Verbrauchers oder Verbraucherkreislaufs als einen Gesamtkonsum zu erfassen. Das Basisstellgerät kann auch zu einem bestimmten Zeitpunkt, insbesondere dem Ist-Zeitpunkt, anhand von Betriebsgrößen, insbesondere einem Ist-Durchfluss und/oder wenigstens einer Ist-Temperatur, einen Ist-Verbrauch berechnen. Ist-Verbrauch oder Konsum können mit einem entsprechenden in dem Basisstellgerät hinterlegten Referenzwert verglichen werden, so dass eine Energieersparnis gegenüber einem vergleichbaren System ohne Basisstellgerät ermittelt werden kann.

Bei einer solchen Mittelwertbildung können die Sensor-Messwerte, wie Temperatur-Messwerte unterschiedlich gewichtet sein. Beispielsweise können die Messwerte eines ersten Temperatursensors vierfach und die Temperatur-Messwerte eines zweiten Temperatursensors nur einfach gewichtet sein. Auf diese Weise kann bei der Energieverbrauchsermittlung beispielsweise unterschiedlich großen Volumenströmen in unterschiedlichen Leitungsabschnitten Rechnung getragen werden.

Um zu vermeiden, dass das Basisstellgerät 1 bzw. der Prozessregler 7 beim Wechsel zwischen unterschiedlichen Regelungsroutinen R₁ bis R₇ in einen instabilen Regelungszustand verfällt, kann die Umschaltung nicht nur basierend auf einem diskreten Schaltpunkt, also einem fixen Schwellenwert, wie einem Temperatur-Schwellenwert, erfolgen, sondern Stabilisierungsmaßnahmen aufweisen. Beispielsweise kann beim Umschalten eine Funktion ausgeführt werden, die zunächst eine gewisse Zeit, die als Einpendelzeit bezeichnet sein kann, verstreichen lässt, bevor beim Überschreiten eines Schwellenwerts von einer ersten Regelungsroutine auf eine zweite Regelungsroutine gewechselt wird. Wenn beispielsweise innerhalb eines gewissen Soll-Temperatur-Differenzbandes, beispielsweise zwischen 450°C und 500°C zur Temperierung eines Metalls eine präzise PID-Regelung erfolgen soll und außerhalb des Bandes eine schnelle P-Regelung, um zügig die Temperatur wieder auf einen Ist-Temperaturwert innerhalb des Temperatur-Differenzbandes einzustellen, kann Hysterese vorgesehen sein. Die Hysterese bewirkt zum Beispiel, dass die P-Regelung angeführt wird, sobald die Ist-Temperatur das Temperatur-Differenzband von 450°C bis 500°C verlässt. Aber erst nachdem die Temperatur einen Hysterese-Puffer von 5°C Temperaturdifferenz oder 10 % des Differenzbandes über- oder unterschritten hat, kehrt die Regelung wieder zur PID-Regelung zurück, also erst dann, wenn die Ist-Temperatur zwischen 455°C und 495°C liegt. Der interne Messbereich des Prozessregelantriebs kann -50 bis 150 °C betragen. Dieser Bereich entspricht vorzugsweise dem einstellbaren Sollwertbereich im Gerät: Angedacht könnten hierbei Anwendungen zur Aufheizung bspw. von großen Kesseln (Energiespeicher) sein, die aufgrund ihres großen Wasservolumens eine große Totzeit mit sich bringen. In der Aufheizphase soll die Regelung möglichst rasch auf den gewünschten Sollwert fahren; im Bereich um den Sollwert soll dann wesentlich beruhigter geregelt werden. Die Temperaturen liegen vorzugsweise bei etwa 60 bis 90 °C. Etwa 10 °C unterhalb des Sollwertes schaltet die Regelung beispielsweise von der P-Regelung auf die PID-Regelung um.

### Bezugszeichenliste

- 1: Basisstellgerät
- 3: Stellventil
- 5: Stellantrieb
- 7: Prozessregler
- 11: Gehäuse
- 13: Schraubverbindung
- 15: Hals
- 17: Halsabschnitt
- 21: Stellstange
- 23: Mutter
- 25: Ventilgehäuse
- 31: Ventilglied
- 33: Ventilsitz
- 35: Wärmetransferfluidströmung
- 35a: Heizfluid
- 41: Mikrocontroller
- 43: Speichereinheit
- 45: Signaleingänge
- 47: Signalausgänge
- 51: Soll-Signaleingang
- 53: Drehgeber
- 57: Timer
- 61: Skala
- 63: Druckknopf, Taste
- 65: Kabelverschraubung
- 71a: Heizanlage
- 71b: Kühlanlage
- 71c: Kühlanlage
- 71d: Kühlanlage
- 71e: Heizanlage
- 71f: Heiz- oder Kühlanlage
- 72: Wärmetauscher
- 73: Tank
- 74: Wärmetauschkessel
- 75a-p: Temperatursensor
- 76: Zuführleitung
- 77: Fluid
- 78: Auslassleitung
- 81a-p: Signalleitung
- 83a-p: Signaleingang
- 85: Signalein- und/oder -ausgang
- 86: Signaleingang
- 91: Ansteuerleitung
- 93: Pumpe
- 95: Pumpensteuerleitung
- 97: Steuersignalausgang
- 101: Wärmezuführleitung
- 103: Wärmeabführleitung
- 111: Kühlwalze
- 172: Wärmetauscherkreislauf
- 177: Verbraucherkreislauf
- 179: Versorgungskreislauf
- a: Kontrollsignal
- A: Signalausgang
- B: Schnittstelle
- F, F": Funktion
- K: Komparatormodul
- L: Leitsignal
- P: Regelmodul
- P₁, P₂: Regelmodul
- Q: An-/Aus-Signal
- R₁-R₇: Regelungsroutine
- S₁, S₂, S₃: Sollwert
- T₁, T₂, T₃: Temperatur
- T_{M}: Temperaturmittelwert
- T_{Y}: Temperaturwert
- X, X₁, X₂: Steuersignal

## Patentansprüche

1. Basisstellgerät (1) zur Einstellung einer Wärmetransferfluidströmung (35) einer Heiz- oder Kühlanlage beispielsweise zur Gebäudeklimatisierung oder zur insbesondere thermischen Lebensmittelbehandlung, wie zum Pasteurisieren von Milch, umfassend
- ein Stellventil (3),
- einen an dem Stellventil (3) angebauten Stellantrieb (5) zum Verfahren des Stellventils (3) und
- einen an dem Stellventil (3) oder dem Stellantrieb (5) angebauten oder eingebauten Prozessregler, der anhand wenigstens einer Heiz- oder Kühlanlagen-Betriebsgröße, wie Temperatur, Druck Durchflussmenge, mittels eines Regelalgorithmus ein Ventilstellsignal erzeugt und einen Stellsteuersignalausgang zum Übertragen des Ventilstellsignals an den Stellantrieb (5) aufweist,
wobei
der Prozessregler (7) wenigstens einen zusätzlichen Steuersignalausgang, wie einen Stellsteuersignalausgang, zum Übertragen eines Steuersignals an wenigstens einen weiteren Aktuator, insbesondere eine Pumpe (93) oder ein weiteres Stellgerät, der Heiz- oder Kühlanlage aufweist,
**gekennzeichnet durch** eine Speichereinheit (43) für wenigstens eine Betriebsgröße, insbesondere wenigstens eine Ist-Temperatur, und/oder anhand von wenigstens einer Betriebsgröße ermittelten Werten, wie Basisstellgerät-Zustandsdaten, insbesondere Diagnosedaten, vorzugsweise eine Anzahl von Hubbewegungen des Stellventils (3), eine Anzahl von Anfahr- und/oder Abfahrvorgängen, wobei auf der Speichereinheit (43) wenigstens eine vorbestimmte Prozessregler-Konfiguration, insbesondere für eine vordefinierte Heiz- oder Kühlanlagenart und/oder wenigstens eine Soll-Betriebsgröße, insbesondere eine Reihe von Soll-Betriebsgrößen zur Steuerung des Prozessreglers in Abhängigkeit von einer Reihe den Soll-Betriebsgrößen zugeordneten Bedingungen, insbesondere Soll-Zeiten oder anderen Soll-Betriebsgrößen, hinterlegt ist.

2. Basisstellgerät (1) nach Anspruch 1, **dadurch gekennzeichnet, dass** der Prozessregler (7) wenigstens einen Ist-Signaleingang, insbesondere wenigstens zwei, vorzugsweise drei oder vier, Signaleingänge, zum Empfangen jeweils einer Ist-Betriebsgröße der Heiz- oder Kühlanlage aufweist, und/oder dass der Prozessregler (7) wenigstens einen Soll-Signaleingang aufweist, der dazu ausgebildet ist, wenigstens eine Soll-Betriebsgröße zu empfangen, wobei die wenigstens eine Soll-Betriebsgröße von einer Leitwarte erzeugt ist und insbesondere das Basisstellgerät (1) eine insbesondere bidirektionale Modbus-Schnittstelle zur Übertragung der wenigstens einen Soll-Betriebsgröße an den Prozessregler (7) aufweist, wobei insbesondere das Basisstellgerät (1) eine galvanische Trennung der Modbus-Schnittstelle von dem Prozessregler (7) umfasst, und/oder wobei das Basisstellgerät (1) wenigstens eine Schnittstelle zum manuellen Eingeben der wenigstens einen Soll-Betriebsgröße aufweist, vorzugsweise ein Bedienpanel insbesondere mit einem Drehgeber (53) oder wenigstens einer Taste (63), und/oder eine Schnittstelle mit einer Empfangs- oder Transceivereinheit zur berührungslosen Kommunikation insbesondere mittels Bluetooth zum Empfangen der wenigstens einen Soll-Betriebsgröße aufweist.

3. Basisstellgerät (1) nach einem der vorigen Ansprüche, **dadurch gekennzeichnet, dass** der Prozessregler (7) wenigstens einen Reglerbaustein umfasst, wobei ein erster Reglerbaustein dazu ausgelegt ist, den Regelalgorithmus zum Erzeugen des Ventilstellsignals auszuführen, und wobei ein vorzugsweise zweiter Reglerbaustein dazu ausgelegt ist, anhand wenigstens einer Heiz- oder Kühlanlagen-Betriebsgröße, wie Temperatur, Druck, Durchflussmenge oder dergleichen, mittels eines vorzugsweise anderen Regelalgorithmus ein Steuersignal für den wenigstens einen weiteren Aktuator zu erzeugen, wobei insbesondere in Abhängigkeit von einem Betriebszustand der Kühl- oder Heizanlage einer der Regler, vorzugsweise der erste Regler, aktiv und ein anderer der Regler, vorzugsweise der zweite Regler, inaktiv ist oder wobei der zweite Regler dazu ausgelegt ist, anhand eines Ausgabewerts des ersten Reglers das Steuersignal zu erzeugen, sodass insbesondere der erste und der zweite Regler eine Kaskadenregelung realisieren, und/oder dass der Prozessregler (7) einen Komparator umfasst, der dazu ausgelegt ist, wenigstens zwei Steuersignale zu empfangen, wobei insbesondere der Komparator zumindest das Ventilstellsignal und/oder eine Kühl- oder Heizanlagenbetriebsgröße, wie eine Fehlermeldung, empfängt, und anhand der empfangenen Signale ein Steuersignal, insbesondere das kleinste oder größte der empfangenen Steuersignale, ausgibt.

4. Basisstellgerät (1) nach einem der vorigen Ansprüche, **dadurch gekennzeichnet, dass** die Speichereinheit (43) wenigstens zwei vorbestimmte Prozessregler-Konfigurationen aufweist, wobei der Prozessregler (7) einen Konfigurationsselektor aufweist, der dazu ausgelegt ist, den Prozessregler (7) gemäß einer vorbestimmten, auf der Speichereinheit (43) hinterlegten Prozessregler-Konfiguration zu konfigurieren, wobei insbesondere der Konfigurationsselektor einen vorbestimmten Betriebszustand, wie das Über- oder Unterschreiten eines Betriebsgrößen-Schwellenwerts, wie eines Zeit-Schwellenwerts, eines Temperatur-Schwellenwerts oder dergleichen, durch eine Ist-Betriebsgröße, insbesondere eine Ist-Zeit, eine Ist-Temperatur oder dergleichen, oder das Eintreten eines Fehlers erkennt und den Prozessregler (7) abhängig vom dem Betriebszustand gemäß einer Prozessregler-Konfiguration der vorbestimmten Prozessregler-Konfigurationen konfiguriert.

5. Basisstellgerät (1) nach einem der vorigen Ansprüche, **gekennzeichnet durch** wenigstens eine Ausgabeeinheit, wie eine Anzeige oder einen Signalausgang, zum Ausgeben von wenigstens einer Betriebsgröße und/oder von wenigstens einem anhand wenigstens einer Betriebsgröße ermittelten Wert, insbesondere einen Ist-Energieverbrauch und/oder vorzugsweise einen durchschnittlichen Energieverbrauch oder Energiekonsum insbesondere innerhalb eines Zeitraums und/oder einen Vergleichswert des Energieverbrauchs oder des Energiekonsums gegenüber einem Referenzverbrauch- oder -konsumwert, und/oder durch ein Gehäuse (11), in dem der Stellantrieb (5) und der Prozessregler (7) angeordnet sind, wobei insbesondere an dem Gehäuse (11) wenigstens eine Ausgabeeinheit und/oder wenigstens eine Schnittstelle angeordnet sind, wobei insbesondere das Gehäuse (11) ortsfest an dem Stellventil (3) angebaut, insbesondere angeflanscht, ist.

6. Heiz- oder Kühlanlagensystem beispielsweise zur Gebäudeklimatisierung oder zur insbesondere thermischen Lebensmittelbehandlung, wie zum Pasteurisieren von Milch, mit
- einem thermischen Verbraucher, wie einem Heiz- oder Kühlkörper,
- einer Wärmequelle und/oder einer Wärmesenke,
- einer Wärmezuführleitung zum Transport einer Wärmetransferfluidströmung (35) von einer Wärmequelle zum thermischen Verbraucher und/oder
- einer Wärmeabführleitung zum Transport einer Wärmetransferfluidströmung (35) von dem thermischen Verbraucher zu einer Wärmesenke und
- einem insbesondere nach einem der vorigen Ansprüche ausgebildeten Basisstellgerät (1) zur Einstellung der Wärmetransferfluidströmung (35) mit einem Stellventil (3), einem Stellantrieb zum Einstellen des Stellventils (3) und einem an dem Stellventil (3) oder dem Stellantrieb (5) angebauten oder eingebauten Prozessregler (7) zum Ansteuern des Stellantriebs (5),
wenigstens einem weiteren durch den Prozessregler (7) des Basisstellgeräts (1) betätigten Aktuator, wie eine Pumpe (93) oder ein weiteres Zusatzstellgerät,
**gekennzeichnet durch** einen Wärmetauscherkreislauf (172) zur wärmeübertragungsgemäßen Verbindung der Wärmequelle und/oder der Wärmesenke mit dem thermischen Verbraucher, wobei insbesondere der Wärmetauscherkreislauf (172) einen wärmeübertragungsgemäß mit der Wärmezuführleitung und/oder der Wärmeabführleitung gekoppelten Wärmetauscher (72) aufweist, wobei der Wärmetauscherkreislauf (172) mittels eines Wärmeübertragungsfluids betrieben wird, das sich von einem Heiz- oder Kühlfluid in der Wärmezuführ- und/oder -abführleitung unterscheidet und/oder von dem Heiz- oder Kühlfluid fluidisch und/oder räumlich getrennt ist.

7. Heiz- oder Kühlanlagensystem nach Anspruch 6, **gekennzeichnet durch** wenigstens einen Temperatursensor (75a-75p) zum Erfassen einer Ist-Temperatur, wobei der wenigstens eine Temperatursensor (75a-75p) in der Wärmezuführleitung, der Wärmeabgabeleitung, dem Wärmetauscherkreislauf (172), insbesondere in einer Wärmeübertragungsfluidleitung zwischen dem Wärmetauscher (72) und dem thermischen Verbraucher, dem thermischen Verbraucher oder Verbraucherkreislauf (177) und/oder der Umgebung des Verbrauchers angeordnet ist.

8. Heiz- oder Kühlanlagensystem nach einem der Ansprüche 6 bis 7,
**dadurch gekennzeichnet, dass** der wenigstens eine weitere Aktuator, insbesondere eine Pumpe (93) oder ein weiteres Stellgerät, in der Wärmezuführleitung, Wärmeabgabeleitung, dem Wärmetauscherkreislauf (172) oder dem Verbraucherkreislauf (177) angeordnet ist, und/oder dass eine Leitwarte zur Steuerung wenigstens eines insbesondere nach einem der Ansprüche 1 bis 5 ausgebildeten Basisstellgeräts(1) vorgesehen ist, wobei die Leitwarte zur Übertragung wenigstens einer Soll-Betriebsgröße signalübertragungsgemäß mit dem Basisstellgerät (1) verbunden ist, wobei insbesondere die Verbindung der Leitwarte mit dem wenigstens einen Basisstellgerät (1) insbesondere zur bidirektionalen Kommunikation vorzugsweise mittels Modbus-Standard ausgelegt ist.

9. Verfahren zur Einstellung einer Wärmetransferfluidströmung (35) einer Heiz- oder Kühlanlage beispielsweise zur Gebäudeklimatisierung oder zur insbesondere thermischen Lebensmittelbehandlung, wie zum Pasteurisieren von Milch, umfassend einen ersten Regelungsalgorithmus zum Erzeugen eines Ventilstellsignals zum Stellen eines Stellventils (3) der Heiz- oder Kühlanlage anhand wenigstens einer Heiz- oder Kühlanlagen-Betriebsgröße, wie Temperatur, Druck, Durchflussmenge, und einen zweiten Regelungsalgorithmus zum Erzeugen eines weiteren Steuersignals für einen weiteren Aktuator, wie eine Pumpe (93) oder ein weiteres Stellgerät, der Heiz- oder Kühlanlage anhand wenigstens einer Betriebsgröße der Heiz- oder Kühlanlage, **dadurch gekennzeichnet, dass** von dem Prozessregler (7) wenigstens ein vorbestimmter Betriebszustand erkannt wird, beispielsweise anhand einer Soll-Betriebsgröße, wie einer manuellen Eingabe, einem Betriebsgrößen-Schwellenwert, insbesondere einer Ist-Zeit, einer Ist-Temperatur oder einem Fehler, wobei der Prozessregler (7) in Abhängigkeit von dem wenigstens einen vorbestimmten Betriebszustand wenigstens eine vorbestimmte Prozessregler-Konfiguration auswählt, wobei die wenigstens eine Prozessregler-Konfiguration wenigstens eine vorkonfigurierte Soll-Betriebsgröße umfasst, insbesondere eine Reihe von Soll-Betriebsgrößen zur Steuerung des Prozessreglers in Abhängigkeit von einer Reihe den Soll-Betriebsgrößen zugeordneten Bedingungen, insbesondere Soll-Zeiten oder anderen Soll-Betriebsgrößen, und/oder wobei die wenigstens eine Prozessregler-Konfiguration wenigstens eine vorkonfigurierte Regelungsroutine umfasst.

10. Verfahren nach Anspruch 9, **dadurch gekennzeichnet, dass** wenigstens eine Ist-Betriebsgröße durch Sensoren in der Wärmetransferfluidströmung (35) gemessen wird, wobei insbesondere zwei oder drei Ist-Betriebsgrößen, insbesondere wenigstens eine Ist-Temperatur und/oder wenigstens ein Ist-Druck, gemessen werden in einer Wärmezuführleitung, einer Wärmeabgabeleitung, einem Wärmetauscherkreislauf (172), insbesondere in einer Wärmeübertragungsfluidleitung zwischen einem Wärmetauscher (72) und einem thermischen Verbraucher, einem thermischen Verbraucher oder einem Verbraucherkreislauf (177) und/oder einer Umgebung des Verbrauchers.

11. Verfahren nach Anspruch 9 oder 10, **dadurch gekennzeichnet, dass** wenigstens eine Soll-Betriebsgröße bereitgestellt wird durch eine manuelle Eingabe insbesondere an dem Basisstellgerät (1) und/oder von einer Leitwarte und/oder berührungslos insbesondere mittels Bluetooth, und/oder dass in einem Regelalgorithmus, insbesondere dem ersten oder zweiten Regelalgorithmus oder einem weiteren Regelalgorithmus, ein Mittelwert aus wenigstens zwei Ist-Betriebsgrößen gebildet wird und/oder eine Differenz zwischen wenigstens zwei Ist-Betriebsgrößen berechnet und/oder eine Differenz zwischen einer Ist-Betriebsgröße und einer Soll-Betriebsgröße berechnet wird.

12. Verfahren nach einem der Ansprüche 9 bis 11,
**dadurch gekennzeichnet, dass** ein Regelalgorithmus, insbesondere der zweite Regelalgorithmus, einen Ausgabewert eines anderen Regelalgorithmus, insbesondere des ersten Regelalgorithmus, als einen Eingabewert verwendet und/oder dass ein Steuersignal, insbesondere ein Ventilstellsignal, von einem Komparator des Prozessreglers (7) in Abhängigkeit von den Ausgabewerten von wenigstens zwei Regelalgorithmen, insbesondere dem ersten und dem zweiten Regelalgorithmus, oder in Abhängigkeit von einer Betriebsgröße, insbesondere einem Schwellenwert oder einem Fehlerzustand, als Komparator-Ausgabesignal erzeugt wird, wobei insbesondere das Komparator-Ausgabesignal dem Ausgabewert eines der wenigstens zwei Regelalgorithmen entspricht, vorzugsweise dem kleinsten oder dem größten Ausgabewert der wenigstens zwei Regelalgorithmen.

13. Verfahren nach einem der Ansprüche 9 bis 12,
**dadurch gekennzeichnet, dass** von dem Basisstellgerät (1) wenigstens ein Ausgabesignal insbesondere für eine Anzeigeeinheit, wie ein Display an dem Basisstellgerät (1) oder eine externe Anzeigeeinheit, oder eine Leitwarte generiert wird, wobei das wenigstens eine Ausgabesignal eine Hubanzahl des Stellventils (3), eine Anzahl von Anfahrten oder Abfahrten der Heizanlage, den Energieverbrauch oder -konsum insbesondere wenigstens eines thermischen Verbrauchers der Heiz- oder Kühlanlage vorzugsweise bezogen auf einen Referenzverbrauchs- oder -konsumwert und/oder eine Fehlermeldung repräsentiert.

14. Verfahren nach einem der Ansprüche 9 bis 13,
**dadurch gekennzeichnet, dass** das Verfahren dazu ausgelegt ist, gemäß der Funktionsweise des Basisstellgeräts (1) gemäß einem der Ansprüche 1 bis 6 und/oder des Heiz- oder Kühlanlagensystems gemäß einem der Ansprüche 7 bis 10 zu verfahren.

## Claims

1. A basic actuating device (1) for adjusting a heat transfer fluid flow (35) of a heating or cooling installation, for example for air conditioning a building or for the treatment, in particular thermal treatment, of food such as for pasteurising milk, comprising
- a control valve (3),
- an actuator (5) attached to the control valve (3) for moving the control valve (3) and
- a process controller which is mounted or installed on the control valve (3) or the actuator (5), which generates a valve control signal by means of a control algorithm on the basis of at least one heating or cooling installation operating variable, such as temperature, pressure, flow rate, and has a control signal output for transmitting the valve control signal to the actuator (5),
wherein
the process controller (7) has at least one additional control signal output, such as an actuator control signal output, for transmitting a control signal to at least one further actuator, in particular a pump (93) or a further actuator, of the heating or cooling installation,
**characterized by** the memory unit (43) for at least one predefined operation variable, in particular at least one actual temperature, and/or values determined by at least one operation variable, such as basic actuating device state data, in particular diagnosis data, preferably a number of stroke movements of the control valve (3), a number of approach and/or distancing procedures, wherein at least one process control configuration, in particular for a predefined heating or cooling installation type and/or at least one target operating variable, in particular a series of target operating variables for controlling the process controller depending on of a series of conditions attributed to the target operating variables, in particular target times or other target operating variables, being stored on the memory unit (43).

2. A basic actuating device (1) according to claim 1, **characterized in that** the process controller (7) has at least one actual signal input, in particular at least two, preferably three or four, signal inputs, for receiving in each case one actual operating variable of the heating or cooling installation, and/or **in that** the process controller (7) has at least one target signal input, which is designed to receive at least one target operating variable, wherein the at least one target operating variable being generated by a control center and in particular the basic actuating device (1) having an in particular bidirectional Modbus interface for transmitting the at least one target operating variable to the process controller (7), wherein in particular the basic actuating device (1) comprises a galvanic separation of the Modbus interface from the process controller (7), and/or wherein the basic actuating device (1) has at least one interface for manual input of the at least one target operating variable, preferably an operating panel in particular with a rotary encoder (53) or at least one key (63), and/or an interface with a receiving or transceiver unit for contactless communication in particular by means of Bluetooth for receiving the at least one target operating variable.

3. A basic actuating device (1) according to one of the preceding claims, **characterized in that** the process controller (7) comprises at least one controller module, wherein a first controller module is designed to execute the control algorithm for generating the valve control signal, and wherein a preferably second controller module is designed to generate a control signal for the at least one further actuator by means of a preferably different control algorithm, using at least one heating or cooling installation operating variable, such as temperature, pressure, flow rate or the like, wherein depending on an operating state of the cooling or heating system, one of the controllers, preferably the first controller, is active and another of the controllers, preferably the second controller, is inactive, or wherein the second controller is designed to generate the control signal on the basis of an output value of the first controller, so that in particular the first and the second controller implement a cascade control, and/or that the process controller (7) comprises a comparator, which is designed to receive at least two control signals, wherein the comparator in particular receiving at least the valve control signal and/or a cooling or heating system operating variable, such as an error message, and outputting a control signal, in particular the smallest or largest of the received control signals, on the basis of the received signals.

4. A basic actuating device (1) according to one of the preceding claims, **characterized in that** the memory unit (43) has at least two predetermined process controller configurations, wherein the process controller (7) has a configuration selector which is designed to configure the process controller (7) according to a predetermined process controller configuration stored on the memory unit (43), wherein in particular the configuration selector detects a predetermined operating state, such as exceeding or falling below an operating variable threshold value, such as a time threshold value, a temperature threshold value or the like, by an actual operating variable, in particular an actual time, an actual temperature or the like, or the occurrence of an error and configures the process controller (7) depending on the operating state according to a process controller configuration of the predetermined process controller configurations.

5. A basic actuating device (1) according to one of the preceding claims, **characterized by** means of at least one output unit, such as a display or a signal output, for outputting at least one operating variable and/or at least one value determined on the basis of at least one operating variable, in particular an actual energy consumption and/or preferably an average energy consumption or energy consumption, in particular within a period of time and/or a comparison value of the energy consumption or energy consumption with respect to a reference consumption or reference consumption value, and/or by a housing (11) in which the actuator (5) and the process controller (7) are arranged, wherein in particular at least one output unit and/or at least one interface are arranged on the housing (11), wherein in particular the housing (11) is mounted, in particular flanged, in a stationary manner on the control valve (3).

6. A heating or cooling installation system, for example for air conditioning a building or for the treatment, in particular thermal treatment, of food such as for pasteurising milk, with
- a thermal consumer, such as a heating or cooling body,
- a heat source and/or a heat sink,
- a heat supply line for transporting a heat transfer fluid flow (35) from a heat source to the thermal consumer and/or
- a heat outlet line for transporting a heat transfer fluid flow (35) from the thermal consumer to a heat sink, and
- a basic actuating device (1), designed in particular according to one of the preceding claims, for adjusting the heat transfer fluid flow (35), with a control valve (3), an actuator for adjusting the control valve (3) and a process controller (7), mounted or installed on the control valve (3) or the actuator (5), for controlling the actuator (5), at least one further actuator, such as a pump (93) or a further additional actuator, operated by the process controller (7) of the basic actuating device (1), **characterized by** a heat exchanger circuit (172) for the heat transfer-according connection of the heat source and/or the heat sink to the thermal consumer, wherein in particular the heat exchanger circuit (172) has a heat exchanger (72) coupled to the heat supply line and/or the heat removal line heat transfer-accordingly, wherein the heat exchanger circuit (172) is operated by means of a heat transfer fluid which is different from a heating or cooling fluid in the heat supply and/or outlet line and/or is fluidically and/or spatially separated from the heating or cooling fluid.

7. A heating or cooling installation system according to claim 6, **characterized by** at least one temperature sensor (75a-75p) for detecting an actual temperature, wherein the at least one temperature sensor (75a-75p) is arranged in the heat supply line, the heat outlet line, the heat exchanger circuit (172), in particular in a heat transfer fluid line between the heat exchanger (72) and the thermal consumer, the thermal consumer or consumer circuit (177) and/or the environment of the consumer.

8. Heating or cooling installation system according to one of the claims 6 to 7, **characterized in that** the at least one further actuator, in particular a pump (93) or a further actuator, is arranged in the heat supply line, heat outlet line, the heat exchanger circuit (172) or the consumer circuit (177), and/or **in that** a control center is provided for controlling at least one basic actuating device (1) designed in particular according to one of claims 1 to 5, the control center being connected to the basic actuating device (1) for the transmission of at least one target operating variable signal transmission-accordingly, wherein the connection of the control center to the at least one basic actuating device (1) being designed in particular for bidirectional communication preferably by means of the Modbus standard.

9. A method for adjusting a heat transfer fluid flow (35) of a heating or cooling installation, for example for air conditioning a building or for the treatment, in particular thermal treatment, of food such as for pasteurising milk, comprising a first control algorithm for generating a valve actuation signal for actuating a control valve (3) of the heating or cooling installation on the basis of at least one heating or cooling installation operating variable, such as temperature, pressure, flow rate and
a second control algorithm for generating a further control signal for a further actuator, such as a pump (93) or a further actuator, of the heating or cooling installation on the basis of at least one operating variable of the heating or cooling installation, **characterised in that** at least one predetermined operating state is recognised by the process controller (7), for example by means of a target operating variable, such as a manual input, an operating variable threshold value, in particular an actual time, an actual temperature or an error, wherein the process controller (7) selects at least one predetermined process controller configuration depending on the at least one predetermined operating state, wherein the at least one process controller configuration comprises at least one preconfigured target operating variable, in particular a series of target operating variables for controlling the process controller depending on series of conditions attributed to the target operating variables, in particular target times or other target operating variables, and/or wherein the at least one process controller configuration comprises at least one preconfigured control routine.

10. A method according to claim 9, **characterized in that** at least one actual operating variable is measured by sensors in the heat transfer fluid flow (35), wherein in particular two or three actual operating variables, in particular at least one actual temperature and/or at least one actual pressure, are measured, are measured in a heat supply line, a heat outlet line, a heat exchanger circuit (172), in particular in a heat transfer fluid line between a heat exchanger (72) and a thermal consumer, a thermal consumer or consumer circuit (177) and/or an environment of the consumer.

11. Method according to claim 9 or 10, **characterized in that** at least one target operating variable is provided by a manual input, in particular at the basic actuating device (1) and/or from a control center and/or contactless, in particular by means of Bluetooth, and/or **in that** in a control algorithm, in particular the first or second control algorithm or a further control algorithm, an average value is formed from at least two actual operating variables and/or a difference between at least two actual operating variables is calculated and/or a difference between an actual operating variable and a target operating variable is calculated.

12. Method according to one of the claims 9 to 11, **characterized in that** one control algorithm, in particular the second control algorithm, uses an output value of another control algorithm, in particular the first control algorithm, as an input value and/or that a control signal, in particular a valve control signal, from a comparator of the process controller (7) is used depending on the output values of at least two control algorithms, in particular the first and the second control algorithm, or depending on an operating variable, in particular a threshold value or an error state, is generated as a comparator output signal, wherein in particular the comparator output signal corresponds to the output value of one of the at least two control algorithms, preferably the smallest or the largest output value of the at least two control algorithms.

13. Method according to one of the claims 9 to 12, **characterized in that** at least one output signal is generated by the basic actuating device (1), in particular for a display unit, such as a display on the basic actuating device (1) or an external display unit, or a control center, wherein the at least one output signal represents a number of strokes of the control valve (3), a number of approaches or distancing of the heating installation, the energy consumption or usage, in particular of at least one thermal consumer of the heating or cooling installation, preferably with regard to a reference consumption or usage value and/or an error message.

14. A method according to one of the claims 9 to 13, **characterized in that** the method is designed to operate according to the functionality of the basis actuating device (1) according to one of the claims 1 to 6 and/or the heating or cooling installation system according to one of the claims 7 to 10.

## Revendications

1. Appareil de réglage de base (1) pour le réglage d'un flux de fluide de transfert de chaleur (35) d'une installation de chauffage ou de refroidissement, par exemple pour la climatisation d'un bâtiment ou pour le traitement, en particulier thermique, de produits alimentaires, tel que pour la pasteurisation du lait, comprenant :
- une soupape de réglage (3),
- un entraînement de réglage (5) monté sur la soupape de réglage (3) pour le déplacement de la soupape de réglage (3), et
- un régulateur de processus monté sur ou intégré dans la soupape de réglage (3) ou l'entraînement de réglage (5), lequel produit un signal de réglage de soupape au moyen d'un algorithme de régulation à l'aide d'au moins une grandeur de fonctionnement d'installation de chauffage ou de refroidissement, telle que la température, la pression, le débit, et présente une sortie de signal de commande de réglage pour la transmission du signal de réglage de soupape à l'entraînement de réglage (5),
dans lequel
- le régulateur de processus (7) présente au moins une sortie de signal de commande supplémentaire, telle qu'une sortie de signal de commande de réglage, pour la transmission d'un signal de réglage à au moins un autre actionneur, en particulier une pompe (93) ou un autre appareil de réglage, de l'installation de chauffage ou de refroidissement,
**caractérisé par** une unité de mémoire (43) pour au moins une grandeur de fonctionnement, en particulier au moins une température de consigne, et/ou des valeurs déterminées à l'aide d'au moins une grandeur de fonctionnement, telles que des données d'état d'appareil de réglage de base, en particulier des données de diagnostic, de préférence une pluralité de mouvements de levage de la soupape de réglage (3), une pluralité d'opérations de démarrage et/ou de départ, dans lequel au moins une configuration de régulateur de processus prédéterminée, en particulier pour une type d'installation de chauffage ou de refroidissement prédéfini et/ou au moins une grandeur de fonctionnement de consigne, en particulier une série de grandeurs de fonctionnement de consigne pour la commande du régulateur de processus en fonction d'une série de conditions attribuées aux grandeurs de fonctionnement de consigne, en particulier des temps de consigne ou d'autres grandeurs de fonctionnement de consigne, est enregistrée dans l'unité de mémoire (43).

2. Appareil de réglage de base (1) selon la revendication 1, **caractérisé en ce que** le régulateur de processus (7) présente au moins une entrée de signal réel, de préférence au moins deux, avantageusement trois ou quatre, pour la réception respectivement d'une grandeur de fonctionnement réelle de l'installation de chauffage ou de refroidissement, et/ou **en ce que** le régulateur de processus (7) présente au moins une entrée de signal de consigne conçue pour recevoir au moins une grandeur de fonctionnement de consigne, dans lequel l'au moins une grandeur de fonctionnement de consigne est produite par un poste de contrôle et l'appareil de réglage de base (1) présente en particulier une interface Modbus en particulier bidirectionnelle pour la transmission de l'au moins une grandeur de fonctionnement de consigne au régulateur de processus (7), dans lequel l'appareil de réglage de base (1) comporte une séparation galvanique de l'interface Modbus par rapport au régulateur de processus (7), et/ou dans lequel l'appareil de réglage de base (1) présente au moins une interface pour la saisie manuelle de l'au moins une grandeur de fonctionnement de consigne, de préférence un panneau de commande, en particulier avec un capteur rotatif (53) ou au moins une touche (63), et/ou une interface avec une unité de réception ou d'émetteur-récepteur pour la communication sans contact, en particulier par Bluetooth, pour la réception de l'au moins une grandeur de fonctionnement de consigne.

3. Appareil de réglage de base (1) selon l'une des revendications précédentes, **caractérisé en ce que** le régulateur de processus (7) comporte au moins un bloc de régulation, dans lequel le premier bloc de régulation est conçu pour exécuter l'algorithme de régulation pour le production du signal de réglage de soupape, et dans lequel de préférence un deuxième bloc de régulation est conçu pour produire, de préférence au moyen d'un autre algorithme de régulation, un signal de réglage pour l'au moins un autre actionneur, à l'aide d'au moins une grandeur de fonctionnement d'installation de chauffage ou de refroidissement, telle que la température, la pression, le débit ou autre, dans lequel, en particulier en fonction d'un état de fonctionnement de l'installation de chauffage ou de refroidissement, un régulateur, de préférence le premier régulateur, est actif et un autre régulateur, de préférence le deuxième régulateur, est inactif ou dans lequel le deuxième régulateur est conçu pour produire le signal de commande à l'aide d'une valeur de sortie du premier régulateur, de telle façon qu'en particulier le premier et le deuxième régulateur réalisent un réglage en cascade, et/ou **en ce que** le régulateur de processus (7) comporte un comparateur, lequel est conçu pour recevoir au moins deux signaux de commande, dans lequel le comparateur reçoit en particulier au moins le signal de réglage de soupape et/ou une grandeur de fonctionnement d'installation de chauffage ou de refroidissement, telle qu'un message de défaut, et émet un signal de commande à l'aide des signaux reçus, en particulier le plus petit ou le plus grand des signaux de commande reçus.

4. Appareil de réglage de base (1) selon l'une des revendications précédentes, **caractérisé en ce que** l'unité de mémoire (43) présente au moins deux configurations de régulateur de processus prédéfinies, dans lequel le régulateur de processus (7) présente un sélecteur de configuration conçu pour configurer le régulateur de processus (7) selon une configuration de régulateur de processus prédéfinie, enregistrée dans l'unité de mémoire (43), dans lequel le sélecteur de configuration détecte en particulier un état de fonctionnement prédéfini, tel que le passage au-dessus ou en dessous d'une valeur seuil de grandeur de fonctionnement, telle qu'une valeur seuil temporelle, une valeur seuil de température ou autre, par une grandeur de fonctionnement réelle, en particulier un temps réel, une température réelle ou autre, ou l'apparition d'un défaut, et configure le régulateur de processus (7) en fonction de l'état de fonctionnement selon une configuration de régulateur de processus parmi les configurations de régulateur de processus prédéfinies.

5. Appareil de réglage de base (1) selon l'une des revendications précédentes, **caractérisé par** au moins une unité de sortie, telle qu'un écran ou une sortie de signal, destinée à délivrer au moins une grandeur de fonctionnement et/ou au moins une valeur déterminée à l'aide d'au moins une grandeur de fonctionnement, en particulier une consommation d'énergie réelle et/ou de préférence une consommation d'énergie moyenne, en particulier en l'espace d'une période et/ou une valeur de comparaison de la consommation d'énergie par rapport à une valeur de consommation de référence, et/ou par un boîtier (11), dans lequel sont disposés l'entraînement de réglage (5) et le régulateur de processus (7), dans lequel au moins une unité de sortie et/ou au moins une interface sont en particulier disposées sur le boîtier (11), dans lequel le boîtier (11) est en particulier monté fixement sur la soupape de réglage (3), en particulier bridé sur celle-ci.

6. Système de chauffage ou de refroidissement, par exemple pour la climatisation d'un bâtiment ou pour le traitement, en particulier thermique, de produits alimentaires, tel que pour la pasteurisation du lait, comprenant :
- un consommateur thermique, tel qu'un corps de chauffage ou de refroidissement,
- une source de chaleur et/ou un puits thermique,
- une conduite d'amenée de chaleur pour le transport d'un flux de fluide de transfert de chaleur (35) à partir d'une source de chaleur vers le consommateur thermique, et/ou
- une conduite d'évacuation de chaleur pour le transport d'un flux de fluide de transfert de chaleur (35) à partir du consommateur thermique vers un puits thermique, et
- un appareil de réglage de base (1) en particulier conçu selon l'une des revendications précédentes, pour le réglage du flux de fluide de transfert de chaleur (35) avec une soupape de réglage (3), un entraînement de réglage pour le réglage de la soupape de réglage (3) et un régulateur de processus (7) monté sur ou intégré dans la soupape de réglage (3) ou l'entraînement de réglage (5) pour l'actionnement de l'entraînement de réglage (5),
- au moins un autre actionneur commandé par le régulateur de processus (7) de l'appareil de réglage de base (1), tel qu'une pompe (93) ou un autre appareil de réglage auxiliaire,
**caractérisé par** un circuit d'échangeur de chaleur (172) destiné à relier la source de chaleur et/ou le puits de chaleur au consommateur thermique par transfert de chaleur, dans lequel le circuit d'échangeur de chaleur (172) présente en particulier un échangeur de chaleur (72) accouplé à la conduite d'amenée de chaleur et/ou à la conduite d'évacuation de chaleur par transfert de chaleur, dans lequel le circuit d'échangeur de chaleur (172) fonctionne au moyen d'un fluide de transfert de chaleur, lequel est différent d'un fluide de chauffage ou de refroidissement dans la conduite d'amenée et/ou d'évacuation de chaleur et/ou séparé fluidiquement et/ou spatialement du fluide de chauffage ou de refroidissement.

7. Système de chauffage ou de refroidissement selon la revendication 6, **caractérisé par** au moins un capteur de température (75a - 75p) destiné à détecter une température réelle, dans lequel l'au moins un capteur de température (75a - 75p) est disposé dans la conduite d'amenée de chaleur, la conduite d'évacuation de chaleur, le circuit d'échangeur de chaleur (172), en particulier dans une conduite de fluide de transfert de chaleur entre l'échangeur de chaleur (72) et le consommateur thermique, le consommateur thermique ou le circuit de consommateurs (177) et/ou l'environnement du consommateur.

8. Système de chauffage ou de refroidissement selon l'une des revendications 6 à 7,
**caractérisé en ce que** l'au moins un autre actionneur, en particulier une pompe (93) ou un autre appareil de réglage, est disposé dans la conduite d'amenée de chaleur, la conduite d'évacuation de chaleur, le circuit d'échangeur de chaleur (172) ou le circuit de consommateurs (177), et/ou **en ce qu'**il est prévu un poste de contrôle pour la commande d'au moins un appareil de réglage de base (1) en particulier conçu selon l'une des revendications 1 à 5, dans lequel le poste de contrôle est reliée à l'appareil de réglage de base (1) par transmission de signaux pour la transmission d'au moins une grandeur de fonctionnement de consigne, dans lequel en particulier la liaison entre le poste de contrôle et l'au moins un appareil de réglage de base (1) est conçue en particulier pour une communication bidirectionnelle, de préférence au moyen du standard Modbus.

9. Procédé pour le réglage d'un flux de fluide de transfert de chaleur (35) d'une installation de chauffage ou de refroidissement, par exemple pour la climatisation de bâtiments ou pour le traitement, en particulier thermique, de produits alimentaires, tel que pour la pasteurisation du lait, comprenant un premier algorithme de régulation pour la production d'un signal de réglage de soupape pour le réglage d'une soupape de réglage (3) de l'installation de chauffage ou de refroidissement à l'aide d'au moins une grandeur de fonctionnement d'installation de chauffage ou de refroidissement, telle que la température, la pression, le débit, et
un deuxième algorithme de régulation pour la production d'un autre signal de commande pour un autre actionneur, tel qu'une pompe (93) ou un autre appareil de réglage, de l'installation de chauffage ou de refroidissement à l'aide d'au moins une grandeur de fonctionnement de l'installation de chauffage ou de refroidissement, **caractérisé en ce qu'**au moins un état de fonctionnement prédéfini est détecté par le régulateur de processus (7), par exemple à l'aide d'une grandeur de fonctionnement de consigne, telle qu'une saisie manuelle, une valeur seuil de grandeur de fonctionnement, en particulier un temps réel, une température réelle ou un défaut, dans lequel le régulateur de processus (7) choisit au moins une configuration de régulateur de processus prédéfinie en fonction de l'au moins un état de fonctionnement prédéfini, dans lequel l'au moins une configuration de régulateur de processus comporte au moins une grandeur de fonctionnement de consigne préconfigurée, en particulier une série de grandeurs de fonctionnement de consigne pour la commande du régulateur de processus en fonction d'une série de conditions attribuées aux grandeurs de fonctionnement de consigne, en particulier des temps de consigne ou d'autres grandeurs de fonctionnement de consigne, et/ou dans lequel l'au moins une configuration de régulateur de processus comporte au moins une routine de régulation préconfigurée.

10. Procédé selon la revendication 9, **caractérisé en ce que** l'au moins une grandeur de fonctionnement réelle est mesurée par des capteurs dans le flux de fluide de transfert de chaleur (35), dans lequel en particulier deux ou trois grandeurs de fonctionnement réelles, en particulier au moins une température réelle et/ou au moins une pression réelle est/sont mesurée(s) dans une conduite d'amenée de chaleur, une conduite d'évacuation de chaleur, un circuit d'échangeur de chaleur (172), en particulier dans une conduite de fluide de transfert de chaleur entre un échangeur de chaleur (72) et un consommateur thermique, un consommateur thermique ou un circuit de consommateurs (177) et/ou un environnement du consommateur.

11. Procédé selon la revendication 9 ou 10, **caractérisé en ce qu'**au moins une grandeur de fonctionnement de consigne est mise à disposition par une saisie manuelle en particulier sur l'appareil de réglage de base (1) et/ou par un poste de contrôle et/ou sans contact en particulier par Bluetooth, et/ou **en ce que** dans un algorithme de régulation, en particulier le premier ou le deuxième algorithme de régulation ou un autre algorithme de régulation, une valeur moyenne est formée à partir d'au moins deux grandeurs de fonctionnement réelles et/ou une différence entre au moins deux grandeurs de fonctionnement réelles est calculée et/ou une différence entre une grandeur de fonctionnement réelle et une grandeur de fonctionnement de consigne est calculée.

12. Procédé selon l'une des revendications 9 à 11,
**caractérisé en ce qu'**un algorithme de régulation, en particulier le deuxième algorithme de régulation, utilise une valeur de sortie d'un autre algorithme de régulation, en particulier du premier algorithme de régulation, en tant que valeur d'entrée, et/ou **en ce qu'**un signal de commande, en particulier un signal de réglage de soupape, est produit par un comparateur du régulateur de processus (7) en fonction des valeurs de sortie d'au moins deux algorithmes de régulation, en particulier du premier et du deuxième algorithme de régulation, ou en fonction d'une grandeur de fonctionnement, en particulier d'une valeur seuil ou d'un état de défaut, en tant que signal de sortie de comparateur, dans lequel en particulier le signal de sortie de comparateur correspond à la valeur de sortie de l'un des au moins deux algorithmes de régulation, de préférence à la plus petite ou à la plus grande valeur de sortie des au moins deux algorithmes de régulation.

13. Procédé selon l'une des revendications 9 à 12,
**caractérisé en ce qu'**au moins un signal de sortie est généré par l'appareil de réglage de base (1), en particulier pour une unité d'affichage, telle qu'un écran sur l'appareil de réglage de base (1) ou une unité d'affichage externe, ou un poste de contrôle, dans lequel l'au moins un signal de sortie représente un nombre de levées de la soupape de réglage (3), un nombre de démarrages ou de départs de l'installation de chauffage ou de refroidissement, la consommation d'énergie en particulier d'au moins un consommateur thermique de l'installation de chauffage ou de refroidissement, de préférence par rapport à une valeur de consommation de référence, et/ou un message de défaut.

14. Procédé selon l'une des revendications 9 à 13,
**caractérisé en ce que** le procédé est conçu pour être exécuté selon le fonctionnement de l'appareil de réglage de base (1) selon l'une des revendications 1 à 6 et/ou du système de chauffage ou de refroidissement selon l'une des revendications 7 à 10.
